# EUROPÄISCHE PATENTSCHRIFT

(11) **EP 3 472 492 B1**
(45) Veröffentlichungstag und Bekanntmachung des Hinweises auf die Patenterteilung: **06.01.2021**
(21) Anmeldenummer: 17731861.5
(22) Anmeldetag: 15.06.2017
(51) Int. Cl.: F16H 19/04, F16H 57/022

(54) **PLANETENGETRIEBE**
PLANETARY TRANSMISSION
TRANSMISSION À TRAIN ÉPICYCLOÏDAL

(30) Priorität: 16.06.2016 WO PCT/EP2016/063955
(43) Veröffentlichungstag der Anmeldung: 24.04.2019
(73) Patentinhaber: Güdel Group AG, 4900 Langenthal (CH)
(72) Erfinder: ZULAUF, Walter, 4937 Ursenbach (CH); MARIE, Christian, 24200 Sarlat-la-Canéda (FR); BOPP, Romain, 24200 Sarlat-la-Canéda (FR); LAVAL, Nicolas, 24550 Campagnac-lès-Quercy (FR); BAUMANN, Stefan, 4556 Aeschi (CH); AMIET, Mathieu, 4528 Zuchwil (CH)
(74) Vertreter: Keller Schneider Patent- und Markenanwälte AG (Bern)
(86) Internationale Anmeldenummer: PCT/EP2017/064703
(87) Internationale Veröffentlichungsnummer: WO 2017/216306

(56) Entgegenhaltungen:
- EP-A2- 0 936 379
- DE-A1-102004 055 743
- DE-A1-102009 006 482
- US-A- 2 424 564
- US-B1- 6 364 803

## Beschreibung

### Technisches Gebiet

Die Erfindung betrifft ein Planetengetriebe, umfassend ein Gehäuse, einen Antriebsteil, einen Abtriebsteil mit einer um eine Abtriebs-Drehachse drehbaren Abtriebswelle und mindestens eine Getriebestufe zwischen Antriebsteil und Abtriebsteil. Der Antriebsteil, die mindestens eine Getriebestufe und der Abtriebsteil sind im Gehäuse gelagert. Das Gehäuse weist abtriebseitig einen Abtriebsflansch auf, wobei der Abtriebsflansch eine in Radialebenen um eine Symmetrieachse kreissymmetrische erste Mantelfläche aufweist.

### Stand der Technik

Dank ihrer günstigen Eigenschaften kommen derartige Planetengetriebe als Übersetzungs-, Überlagerungs- und Schaltgetriebe in allen Bereichen der Antriebstechnik zum Einsatz. So hat sich dieser Getriebetyp nicht nur im Fahrzeug- und Schiffsbau, sondern auch im allgemeinen Maschinenbau und bei stationären Zwecken durchgesetzt, wenn es darauf ankommt, hohe Leistungen und hohe Drehmomente bei kompakter Bauweise zu übertragen.

Spezifische Anwendungen solcher Planetengetriebe sind namentlich der Antrieb von Ritzeln, die zur Bildung eines Linearantriebs mit Zahnstangen zusammenwirken, sowie der Antrieb von Ritzeln oder Riemenscheiben zum Antreiben von Ketten bzw. Riemen. Im ersten Fall muss zur Gewährleistung eines zuverlässigen Betriebs der Abstand zwischen dem Ritzel und der Teilungslinie der Zahnstange präzise eingestellt werden. Im zweiten Fall dient die Verstellbarkeit des Ritzels bzw. der Riemenscheibe der Einstellung der Ketten- bzw. Riemenspannung. In beiden Fällen lässt sich die Verstellbarkeit realisieren, indem das Ritzel bzw. die Riemenscheibe gemeinsam mit dem Getriebe und gegebenenfalls dem am Gehäuse des Getriebes angeordneten Antriebsmotor positioniert wird.

Es sind Lösungen bekannt, bei welchen das gesamte Getriebe auf einer maschinenseitigen Adapterplatte zentriert und befestigt wird. Diese Adapterplatte wird danach mittels (typischerweise 4) Befestigungsschrauben am Maschinenständer befestigt. Schlitze im Bereich der Befestigungsschrauben und eine maschinenseitige Zustellschraube erlauben die radiale Zustellung des Ritzels zur Teilungslinie derZahnstange - mit dem Ziel eines spielfreien bzw. spielarmen Zahneingriffes. Eine analoge Lösung kann bei einem Ritzel bzw. einer Riemenscheibe gewählt werden, deren Position zur Einstellung der Ketten- bzw. Riemenspannung entlang einer Linie einstellbar sein soll.

Die DE 10 2004 055 743 A1 (SEW Eurodrive) betrifft ein ein- oder mehrstufiges Planetengetriebe mit einer abtriebsseitigen Schnittstelle zu einer anzutreibenden Vorrichtung, wobei die Schnittstelle der abtriebsseitigen Schnittstelle eines Standardgetriebes (z. B. Stirnradgetriebes oder Flachgetriebes) gleichen soll. Insbesondere umfasst das Planetengetriebe einen austauschbaren Flansch, welcher wahlweise als Quadratflansch oder Rundflansch ausgeführt sein kann. Die Zentrierung des Abtriebsflansches ist an einem Lager, insbesondere einem Aussenring des abtriebsseitigen Lagers, vorgesehen.

Von der Firma Wittenstein AG, Igersheim (Deutschland) werden Planetengetriebe angeboten, deren Gehäuse eingearbeitete Schlitze aufweisen. Dadurch erübrigt sich die maschinenseitige Adapterplatte. Die durch das Ritzel erzeugten Radialkräfte werden (ähnlich der vorgenannten Lösung) typischerweise mit einer direkt auf den Befestigungsflansch wirkenden Zustellschraube abgefangen.

Die existierenden Lösungen sind in Bezug auf die präzise Einstellung der Position und/oder die Abstützung der auf den Abtrieb einwirkenden Kräfte verbesserungswürdig.

### Darstellung der Erfindung

Aufgabe der Erfindung ist es, ein dem eingangs genannten technischen Gebiet zugehörendes Planetengetriebe zu schaffen, welches eine einfache Einstellung der Position der Abtriebs-Drehachse ermöglicht und eine sichere Abstützung der auf den Abtrieb einwirkenden Kräfte ermöglicht.

Die Lösung der Aufgabe ist durch die Merkmale des Anspruchs 1 definiert. Gemäss der Erfindung ist die erste Mantelfläche bezüglich der Abtriebs-Drehachse exzentrisch angeordnet. Die Symmetrieachse der Mantelfläche des Abtriebsflanschs und die Drehachse der Abtriebswelle fallen also nicht zusammen.

Der Antriebsteil ist mit einem Antrieb verbunden bzw. verbindbar. Die Verbindung kann direkt erfolgen, z. B. indem eine Antriebswelle des Antriebs unmittelbar auf den Antriebsteil einwirkt oder einen Teil desselben bildet, oder die Verbindung erfolgt über weitere Elemente, z. B. eine Übertragungswelle, einen Riemen oder eine Kette. Entsprechend kann der Antrieb direkt am Planetengetriebe befestigt oder separat davon angeordnet werden.

Der Abtriebsteil kann als Befestigungsteil, z. B. als Befestigungsplatte, für weitere Komponenten, z. B. ein Ritzel, eine Riemenscheibe usw., ausgebildet sein. Er kann auch direkt die weitere Komponente umfassen.

Der Abtriebsflansch dient dazu, das Planetengetriebe an einem Montageelement, z. B. einem Maschinengehäuse oder einer Montageplatte, zu befestigen und abzustützen. Er kann einstückig mit dem Gehäuse oder als separates am Gehäuse gelagertes Bauteil ausgebildet sein. Er kann auch aus mehreren Komponenten bestehen, die allesamt separate Bauteile sind oder teilweise einstückig mit dem Gehäuse des Planetengetriebes ausgebildet sind.

Es stehen zwei Anwendungen der Getriebe im Vordergrund: der Antrieb von Ritzeln, die zur Bildung eines Linearantriebs mit Zahnstangen zusammenwirken, sowie der Antrieb von Ritzeln oder Riemenscheiben zum Antreiben von Ketten bzw. Riemen. Grundsätzlich kann das erfindungsgemässe Planetengetriebe aber auch für andere Anwendungen eingesetzt werden.

Aufgrund der Exzentrizität der Mantelfläche in Bezug auf die Abtriebs-Drehachse kann durch eine Rotation des Planetengetriebes die am Abtriebsteil montierte Komponente (z. B. ein Ritzel oder eine Riemenscheibe) maximal um den zweifachen Wert des Exzenters verstellt werden. Gleichzeitig bleibt die Mantelfläche des Abtriebsflanschs kreissymmetrisch, was eine sichere Abstützung an einem Montageelement erlaubt, wenn dieses mit einer passenden kreisrunden Öffnung versehen ist.

Da keine linearen Schlitze benötigt werden, um die Verstellbarkeit zu ermöglichen, ergibt sich eine ideale Einleitung der Kräfte in die maschinenseitige Struktur. Alle radialen Kräfte, welche aus dem Abtrieb auf das Planetengetriebe einwirken, werden formschlüssig direkt in die maschinenseitige Struktur abgeleitet. Die erfindungsgemässe Lösung ist gleichzeitig kompakt und minimiert den konstruktiven Aufwand im Bereich der Aufnahme des Planetengetriebes.

Bei einer ersten Ausführungsform ist die erste Mantelfläche kreiszylindrisch. Dies ermöglicht eine Montage in einer einfach ausgebildeten maschinenseitigen Struktur. Die z-Position des Getriebes lässt sich auf einfache Weise festlegen, z. B. mittels eines Anschlags. Die Feinjustierung kann mit Hilfe von entsprechend dimensionierten Unterlegscheiben erfolgen.

Bei einer zweiten Ausführungsform ist die erste Mantelfläche kreiskegelabschnittförmig. Das Getriebegehäuse muss so montiert werden, dass das vom Getriebe erzeugte Drehmoment dieses selber nicht in Rotation versetzen kann, sondern dass die bei der Einstellung der Getriebeposition gefundene Orientierung (Rotation) vom Getriebe sicher auf die maschinenseitige Struktur übertragen werden kann.

Die Übertragung kann mittels Reibschluss erfolgen. Zur Erhöhung dieses Reibschlusses wird nun bei der zweiten Ausführungsform die Mantelfläche kreiskegelabschnittförmig ausgebildet. Jegliche axial erzeugten Kräfte von Klemmsystemen verstärken über den Konuswinkel die Sicherung auf Verdrehung massiv. Mit einer minimalen Anzahl an Klemmschrauben kann somit eine maximale Sicherheit auf Verdrehung erreicht werden.

Mit Vorteil beträgt ein Konuswinkel der ersten Mantelfläche mindestens 10°, bevorzugt deutlich über 10°, beispielsweise 15° oder mehr. Dies vermeidet eine Selbsthemmung und erleichtert somit die Handhabung erheblich.

Bevorzugt beträgt ein Abstand zwischen der Drehachse und der Symmetrieachse 0.3-8.0 mm, insbesondere 0.3-4.0 mm. Dieser Abstand beträgt bei einer ersten Art von Getrieben, die eine Zustellung auf eine Zahnstange ermöglichen, beispielsweise 0.5 mm, bei Antrieben, die das Spannen von Ketten oder Riemen ermöglichen sollen, beispielsweise 2.5 mm. Bei einer zweiten Art von Getrieben, die eine Zustellung auf eine Zahnstange ermöglichen, wird ein grösserer Exzenter gewählt, insbesondere im Bereich 1.8-7.0 mm, der ein vollständiges Ausrücken des am Planetengetriebe angeordneten Ritzels aus der Zahnstange ermöglicht.

Je nach Anwendung sind auch andere Abstände und damit andere Exzentrizitäten möglich.

Mit Vorteil weist der Abtriebsflansch eine Mehrzahl von zur Symmetrieachse symmetrisch angeordneten bogenförmigen axialen Schlitzen auf, d. h. Schlitzen, die sich in axialer Richtung durch den Flansch hindurch erstrecken. Bei richtiger Anordnung ermöglichen die Schlitze die Fixierung des Abtriebsflanschs an einer Montageöffnung des Maschinengestells. Dazu wirken Schrauben mit entsprechenden, entlang des Umfangs der Montageöffnung regelmässig angeordneten Gewindelöchern zusammen. Sie durchdringen die Schlitze, und die Schraubenköpfe stützen sich auf dem Abtriebsflansch ab.

Anstelle von Schlitzen und diese durchdringenden Schrauben können andere Befestigungslösungen eingesetzt werden. So kann beispielweise eine Klemmplatte eingesetzt werden, die den Abtriebsflansch übergreift und ihn so am Maschinengestell festklemmt. Anstelle einer Klemmplatte können auch mehrere Klemmsegmente zum Einsatz kommen, welche den Abtriebsflansch bereichsweise überdecken und zum Festklemmen genutzt werden. Die Verwendung mehrerer Segmente ist insbesondere bei limitierten Platzverhältnissen vorteilhaft.

Bei einer bevorzugten Variante der Erfindung ist in einem ersten axialen Abschnitt des Abtriebsflanschs die erste Mantelfläche ausgebildet, und in einem zweiten axialen Abschnitt des Abtriebsflanschs ist eine zweite Mantelfläche ausgebildet, wobei die zweite Mantelfläche um die Abtriebs-Drehachse kreissymmetrisch ist.

Zur Verwendung dieser Variante des Planetengetriebes wird die Einbauöffnung entsprechend dem Durchmesser der eingesetzten Mantelfläche vorbereitet. Für den jeweils anderen axialen Abschnitt wird eine Geometrie bereitgestellt, die die entsprechende Mantelfläche in Bezug auf die Einbauöffnung freistellt.

Diese Variante ermöglicht somit sowohl die Verwendung in Anwendungen, in welchen eine Verstellmöglichkeit benötigt wird (z. B. für das Zustellen auf eine Zahnstange oder das Spannen von Ketten oder Riemen), als auch in Anwendungen, bei welchen keine Verstellmöglichkeit notwendig ist, aber eine genaue Zentrierung gewünscht ist, namentlich bei Spindelantrieben bzw. dem Antrieb von Kugelgewinde-Linearantrieben. Die genaue Zentrierung minimiert die Belastung der Kupplung.

Aufgrund der universellen Verwendbarkeit vereinfacht sich die Lagerhaltung, auch in Bezug auf Ersatzteile.

Bevorzugt ist der zweite axiale Abschnitt in Bezug auf den ersten axialen Abschnitt antriebseitig angeordnet. Die entsprechend abtriebseitige Anordnung des zweiten axialen Abschnitts reduziert den Hebel für die Ableitung von Radialkräften in Bezug auf Anwendungen, bei welchen die exzentrische Mantelfläche des Abtriebsflanschs eingesetzt wird. Dies sind diejenigen Anwendungen, welche in der Regel höhere Radialkräfte mit sich bringen.

Mit Vorteil weist der Abtriebsflansch eine Mehrzahl von zur Drehachse symmetrisch angeordneten axialen Durchgangslöchern auf. Diese ermöglichen die sichere Fixierung des Abtriebsflanschs in Anwendungen ohne Verstellmöglichkeit, wenn der Abtriebsflansch mit seinem zweiten Abschnitt in der Montageöffnung gehalten ist. Vorzugsweise sind sowohl die oben erwähnten Schlitze als auch die Durchgangslöcher vorhanden, so dass die optimale Befestigungsmöglichkeit in beiden Anwendungsfällen gegeben ist.

Vorzugsweise ist die erste Mantelfläche am Aussenring eines Kegelrollenlagers ausgebildet. Dieses bildet ein Festlager mit einer sehr engen axialen Führung und ist somit für die üblichen Anwendungen der Planetengetriebe sehr gut geeignet. Durch die Ausbildung der Mantelfläche als Aussenring ergibt sich eine schlanke Bauweise.

Mit Vorteil ist auch die zweite Mantelfläche am Aussenring des Kegelrollenlagers ausgebildet. Damit ist eine sichere Abstützung sowohl bei zentrischer als auch bei exzentrischer Nutzung gegeben.

Bei einer ersten Gruppe von Ausführungsformen ist der Abtriebsflansch fest mit dem Gehäuse des Planetengetriebes verbunden bzw. einstückig mit diesem ausgeführt, und die exzentrische erste Mantelfläche ist ebenfalls fest am Abtriebsflansch und damit am Gehäuse angeordnet. Bei der Verstellung der Position der Abtriebs-Drehachse mit Hilfe der ersten Mantelfläche wird dann das Planetengetriebe zusammen mit dem Abtriebsflansch um die (exzentrische) Symmetrieachse der ersten Mantelfläche gedreht.

Bei einer zweiten Gruppe von Ausführungsformen weist der Abtriebsflansch ein auf einer Mantelfläche des Gehäuses drehbar gelagertes Ringelement auf, wobei die erste Mantelfläche aussen am Ringelement ausgebildet ist. Das Gehäuse des Planetengetriebes umfasst in diesem Fall insbesondere eine in Bezug auf die zentrale Achse des Getriebes und die Drehachse des Abtriebselements zentrische Mantelfläche, welche in einer in Bezug auf die am Ringelement ausgebildete erste Mantelfläche exzentrischen Aufnahmeöffnung aufgenommen ist. Durch Verdrehen des Ringelements lässt sich somit die radiale Position der Abtriebs-Drehachse verändern. Dabei kann die Drehstellung des Getriebes beibehalten werden.

Bei einer bevorzugten Ausführungsform aus dieser zweiten Gruppe umfasst der Abtriebsflansch weiter einen Klemmring, mittels welchem das Ringelement axial klemmbar ist. Sobald die gewünschte Drehstellung eingestellt ist, kann der Klemmring axial zugestellt werden, bis das Ringelement zwischen dem Klemmring und einem weiteren Element (insbesondere einem Montageelement wie z. B. einem Maschinengehäuse oder einer Montageplatte) verklemmt ist. Dadurch ergibt sich eine Sicherung gegen ein Verdrehen des Ringelements und dadurch gegen eine unbeabsichtigte Verstellung der radialen Position der Abtriebs-Drehachse.

Mit Vorteil weist der Klemmring mindestens eine radiale Öffnung auf, um eine Drehpositionierung des Ringelements mit einem Werkzeug zu ermöglichen. Das Ringelement weist beispielsweise radiale Bohrungen auf, in welche das Werkzeug eingreifen kann, um die Drehstellung des Ringelements und damit die radiale Position der Abtriebs-Drehachse einzustellen.

Bei einer anderen bevorzugten Ausführungsform aus der genannten zweiten Gruppe umfasst der Abtriebsflansch nebst dem Ringelement weiter einen Befestigungsring und eine Stellschraube, wobei mit Hilfe der Stellschraube eine Drehposition des Ringelements relativ zum Befestigungsring einstellbar ist. Die Stellschraube ermöglicht eine feinfühlige Verstellung. Durch Wahl einer kleinen Gewindesteigung wird sichergestellt, dass die Schraube bei allen auftretenden Torsionskräften selbsthemmend ist. Eine zusätzliche Fixierung der Drehposition erübrigt sich somit.

Bei einer weiteren bevorzugten Ausführungsform umfasst das Planetengetriebe einen ringförmigen Klemmflansch, welcher drehbar aber unverlierbar am Gehäuse gelagert ist. Das Planetengetriebe kann somit als einzelne Baugruppe geliefert und verwendet werden. Der Klemmflansch ermöglicht eine beliebige Verdrehung des Planetengetriebes und damit eine beliebige Einstellung der radialen Position der Abtriebs-Drehachse, wobei auch Verdrehwinkel von 180° (oder mehr) ohne Weiteres möglich sind. Der Klemmflansch wird insbesondere über axiale Öffnungen an einer die Montageöffnung umgebenden Struktur befestigt (z. B. mittels Schrauben oder anderer stiftartiger Befestigungselemente). Durch Festziehen der Befestigungselemente kann die Drehstellung des Planetengetriebes fixiert werden. Dazu wirkt der Klemmflansch axial mit einem Abschnitt des Gehäuses des Planetengetriebes zusammen.

Um den Klemmflansch unverlierbar am Gehäuse zu lagern, weist der Klemmflansch bevorzugt radial nach innen ragende Elemente auf, die mit einer umlaufenden Nut in einer Mantelfläche des Abtriebsflanschs zusammenwirken. Bei der Mantelfläche handelt es sich insbesondere um eine entsprechend der ersten Mantelfläche exzentrische Mantelfläche, der Klemmflansch wird dann so an der Struktur befestigt, dass er die Montageöffnung symmetrisch umgibt.

Bei bevorzugten Ausführungsformen des erfindungsgemässen Planetengetriebes macht ein Abstand zwischen der Abtriebs-Drehachse und der Symmetrieachse der ersten Mantelfläche mindestens 2.5% des Durchmessers des Abtriebsflanschs aus.

Ähnlicherweise umfasst eine bevorzugte Ausführungsform eines Linearsystems
- ein erfindungsgemässes Planetengetriebe,
- ein am Abtriebsflansch angeordnetes Ritzel, und
- eine Zahnstange zum Zusammenwirken mit dem Ritzel,
   wobei ein Abstand zwischen der Abtriebs-Drehachse und der Symmetrieachse der ersten Mantelfläche mindestens dem Modul der Zahnstange entspricht, bevorzugt mindestens 5% grösser ist als der Modul der Zahnstange.

Eine entsprechende Exzentrizität ermöglicht es, das Ritzel durch Verdrehen des Getriebes um (annähernd) 180° aus der Zahnstange vollständig auszurücken. Das Getriebe kann dann - gegebenenfalls mit der Struktur, an welchem es befestigt ist - entlang der Zahnstange weg bewegt werden. Eine gegenüber dem dazu notwendigen Minimum etwas erhöhte Exzentrizität (z. B. von plus 5% oder plus 10%) schafft eine gewisse Sicherheitsmarge und ermöglicht eine zusätzliche Feinjustage der Endposition, z. B. zum Ausgleich von Herstellertoleranzen an den Bauteilen und von Abweichungen bei den kundenseitigen Montagepositionen der Bauteile.

Alternativ ist die Exzentrizität deutlich kleiner, so dass zwar ein Ritzel nicht vollständig aus einer Zahnstange ausrückbar ist, eine feine Justierung zum Ausgleich von Toleranzen bzw. Positionierungsfehlern aber möglich bleibt.

Insbesondere bei Planetengetrieben für schwerere Antriebe wird die Einstellung der Position erleichtert, wenn der Abtriebsflansch eine Aussenverzahnung aufweist. Diese wirkt mit einem Ritzel zusammen, welches am Maschinengestell gelagert werden kann und die Einstellung der Drehlage des Getriebes (inkl. angebrachtem Antriebsmotor) ermöglicht. Bei bevorzugten Varianten des erfindungsgemässen Planetengetriebes umfasst dieses einen antriebseitigen Flansch zur Befestigung eines Antriebs, wobei der Flansch drehbar am Gehäuse des Planetengetriebes angeordnet ist und eine Drehstellung des Flanschs relativ zum Gehäuse durch eine Klemmung fixierbar ist. Die Drehstellung des Antriebs (z. B. eines Motors) lässt sich so unabhängig von der Drehstellung des Planetengetriebes einstellen.

Die Anbringung eines entsprechenden antriebseitigen Flansches ist nicht auf die erfindungsgemässen Planetengetriebe beschränkt. Sie kann auch bei anderen Planetengetrieben sinnvoll sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht einer ersten Ausführungsform des erfindungsgemässen Planetengetriebes;
- Fig. 2: eine Frontansicht der ersten Ausführungsform;
- Fig. 3: eine Seitenansicht der ersten Ausführungsform;
- Fig. 4: ein Schnittbild der ersten Ausführungsform;
- Fig. 5: eine Schrägansicht einer zweiten Ausführungsform des erfindungsgemässen Planetengetriebes;
- Fig. 6: eine Schrägansicht einer dritten Ausführungsform des erfindungsgemässen Planetengetriebes;
- Fig. 7: eine Seitenansicht einer vierten Ausführungsform des erfindungsgemässen Planetengetriebes;
- Fig. 8: eine Schrägansicht einer fünften Ausführungsform des erfindungsgemässen Planetengetriebes;
- Fig. 9: eine Schrägansicht einer sechsten Ausführungsform des erfindungsgemässen Planetengetriebes;
- Fig. 10: eine Frontansicht der sechsten Ausführungsform;
- Fig. 11: eine Seitenansicht der sechsten Ausführungsform;
- Fig. 12A, B: Schnittbilder der sechsten Ausführungsform;
- Fig. 13: eine Schrägansicht einer siebten Ausführungsform des erfindungsgemässen Planetengetriebes;
- Fig. 14A, B: Schnittbilder der siebten Ausführungsform;
- Fig. 15: eine Schrägansicht einer achten Ausführungsform des erfindungsgemässen Planetengetriebes;
- Fig. 16: ein Schnittbild der achten Ausführungsform;
- Fig. 17: eine Schrägansicht eines erfindungsgemässen Planetengetriebes mit einem Motorbefestigungsflansch; und
- Fig. 18: ein Schnittbild des Planetengetriebes mit Motorbefestigungsflansch.

Grundsätzlich sind in den Figuren gleiche Teile mit gleichen Bezugszeichen versehen.

### Wege zur Ausführung der Erfindung

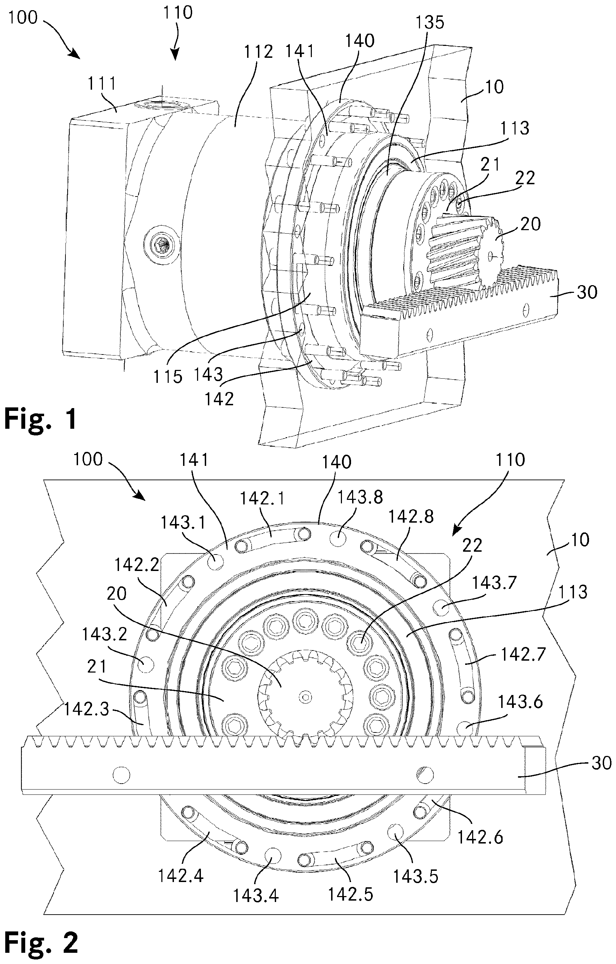

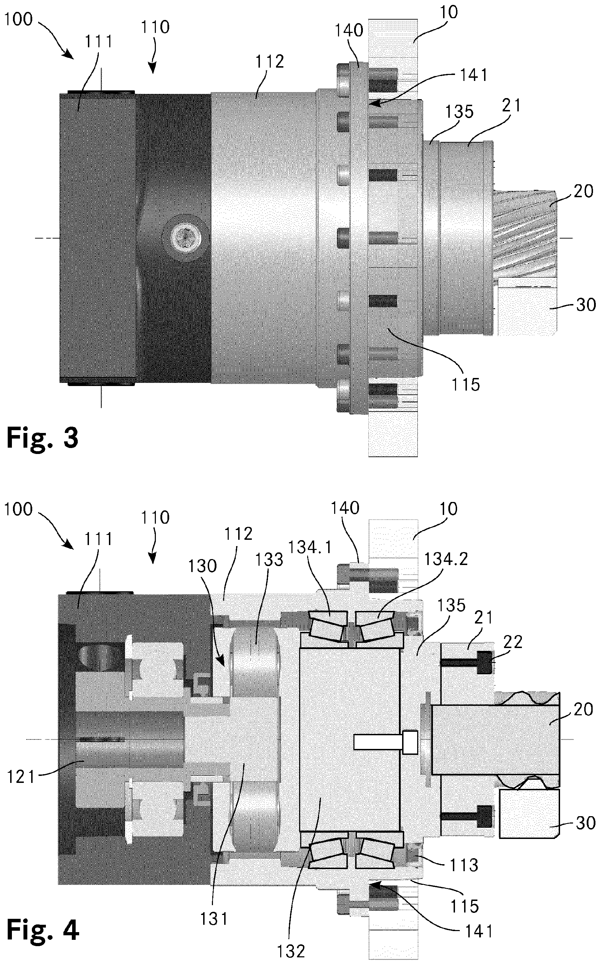

Die Figuren 1-4 zeigen eine erste Ausführungsform eines erfindungsgemässen Planetengetriebes: Die Figur 1 ist eine Schrägansicht, die Figur 2 eine Frontansicht, die Figur 3 eine Seitenansicht, und die Figur 4 zeigt ein Schnittbild entlang der zentralen Achse des Getriebes.

Das Planetengetriebe 100 ist in einer Montageplatte 10 gelagert. Die Montageplatte 10 ist beispielsweise Teil eines Maschinengestells oder eines Maschinengehäuses. Im dargestellten Ausführungsbeispiel ist am Planetengetriebe 100 abtriebseitig ein Ritzel 20 befestigt. Dieses Ritzel 20 wirkt mit einer Zahnstange 30 zusammen.

In an sich bekannter Weise umfasst das Planetengetriebe 100 ein Gehäuse 110 mit einem antriebseitigen Gehäuseteil 111 und einem unmittelbar daran anschliessenden abtriebseitigen Gehäuseteil 112. Der antriebseitige Gehäuseteil 111 weist einen hinteren (antriebseitigen) Abschnitt mit im Wesentlichen quadratischem Querschnitt und einen vorderen (abtriebseitigen) Abschnitt mit im Wesentlichen kreisförmigem Querschnitt auf. Im antriebseitigen Gehäuseteil 111 ist ein Kupplungsteil 121 zur Aufnahme einer Motorwelle aufgenommen, im abtriebseitigen Gehäuseteil 112 sind die Elemente des eigentlichen Planetengetriebes 130 aufgenommen, namentlich das mit dem Kupplungsteil 121 verbundene Sonnenrad 131 und die am Planetenradträger 132 angeordneten Planetenräder 133. Entsprechende Planetengetriebe sind allgemein bekannt, somit erübrigt sich eine nähere Beschreibung dieser Komponenten.

Der Planetenradträger 132 ist über zwei spiegelbildlich angeordnete Kegelrollenlager 134.1, 134.2 am abtriebseitigen Gehäuseteil 112 gelagert. Am vorderen Ende des Planetenradträgers 132 ist eine Befestigungsplatte 135 angeordnet. Diese weist umlaufend regelmässig beabstandete Gewindeöffnungen auf. Über diese Gewindeöffnungen ist stirnseitig eine Halteplatte 21 mittels Schrauben 22 fest mit der Befestigungsplatte 135 verbunden. In der Halteplatte 21 ist das Ritzel 20 befestigt, z. B. eingeschrumpft.

Zwischen der Befestigungsplatte 135 und dem abtriebseitigen Ende des abtriebseitigen Gehäuseteils 112 ist eine Ringdichtung 113 aufgenommen. Sie dichtet den Bereich der Kegelrollenlager 134.1, 134.2 nach aussen hin ab.

Das Planetengetriebe 100 weist an seinem abtriebseitigen Gehäuseteil 112 einen damit einstückig ausgebildeten, umlaufenden, ringförmigen Befestigungsflansch 140 auf. Dieser weist eine senkrecht zur zentralen Achse des Planetengetriebes 100 stehende vordere (abtriebseitige) Befestigungsfläche 141 auf. Der abtriebseitige Gehäuseteil 112 weist abtriebseitig des Befestigungsflanschs 140 zudem eine Mantelfläche 115 auf. Im befestigten Zustand liegt die Befestigungsfläche 141 flächig an der Montageplatte 10 an und stützt somit das Planetengetriebe 100 auf der Montageplatte 10 ab. Die Mantelfläche 115 ist passend in einer kreisförmigen Öffnung der Montageplatte 10 gehalten und stützt somit das Planetengetriebe in allen Richtungen gegen radiale Kräfte ab. Im Befestigungsflansch 140 verlaufen eine Mehrzahl von axial durchgehenden Öffnungen, nämlich acht gleichmässig angeordnete bogenförmige Schlitze 142.1...8 mit einem Sektorwinkel von je 22.5° sowie acht kreisrunde Löcher 143.1...8, welche jeweils mittig zwischen den Schlitzen angeordnet sind.

Der Befestigungsflansch 140 mit den Schlitzen 142 und den Löchern 143 sowie die Mantelfläche 115 sind bezüglich der zentralen Achse des Planetengetriebes 100 und damit der Drehachse des Ritzels 20 exzentrisch ausgebildet, d. h. die Mantelfläche 115, der umlaufende Rand des Befestigungsflanschs 140, die Schlitze 142 und die Löcher 143 sind kreissymmetrisch zu einer Achse angeordnet, welche einen Abstand zur zentralen Achse des Planetengetriebes 100 und damit zur Drehachse des Ritzels 20 aufweist. Der Abstand beträgt im gezeigten Ausführungsbeispiel 0.5 mm. Dies erlaubt eine Einstellung des Abstands des Ritzels 20 zur Zahnstange 30, indem das Planetengetriebe 100 relativ zur Montageplatte 10 um die Symmetrieachse des Befestigungflanschs 140 bzw. der Mantelfläche 115 verdreht wird.

Die Fixierung des Planetengetriebes 100 an der Montageplatte 10 erfolgt je nach Anwendung mit Hilfe der Schlitze 142.1...8 und/oder der Löcher 143.1...8:
a) Falls eine Verstellung des Abstands gewünscht ist, werden in der Montageplatte 10 sechzehn kreisförmig und gleichmässig beabstandete Gewindeöffnungen vorgesehen. Mittels acht durch die acht Schlitze 142.1...8 geführter Schrauben lässt sich dann das Planetengetriebe 100 in allen Drehstellungen an der Montageplatte 10 festklemmen, wobei je nach Drehlage eine erste oder eine zweite Gruppe von je in einem Abstand von 45° positionierten acht Löchern in der Montageplatte 10 verwendet wird. Über die Schraubenköpfe und den Befestigungsflansch 140 ist das Planetengetriebe formschlüssig an der Montageplatte 10 gehalten und stützt es gegen axiale Kräfte ab. Torsionskräfte werden über die Klemmung zwischen den Schraubenköpfen und der hinteren Fläche des Befestigungsflanschs 140 bzw. zwischen der Befestigungsfläche 141 und der Rückseite der Montageplatte aufgefangen.
b) Ist keine Verstellung des Abstands gewünscht, müssen in der Montageplatte 10 nur acht kreisförmig und gleichmässig beabstandete Gewindeöffnungen vorgesehen werden. Mittels acht durch die acht Löcher 143.1...8 geführter Schrauben lässt sich dann das Planetengetriebe 100 in an sich bekannter Weise drehfest an der Montageplatte 10 befestigen. Auch Torsionskräfte werden so durch Formschluss aufgefangen.

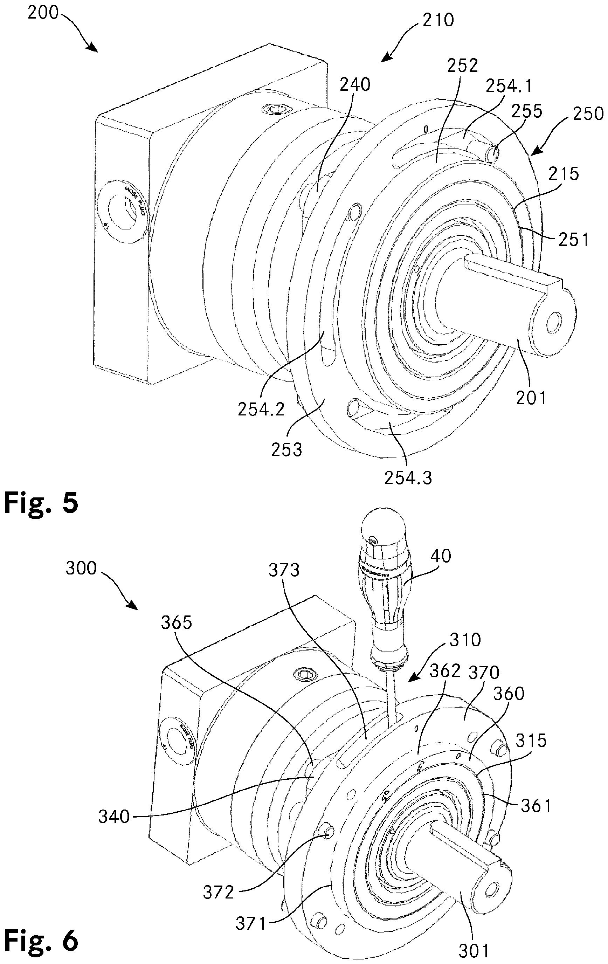

Die Figur 5 ist eine Schrägansicht einer zweiten Ausführungsform des erfindungsgemässen Planetengetriebes 200. Diese umfasst ein an sich bekanntes Planetengetriebe mit einem Gehäuse 210, das abtriebseitig einen Befestigungsflansch 240 mit vier parallel zur Längsachse des Planetengetriebes orientierten, durchgehenden schlitzartigen Öffnungen aufweist. Ebenfalls ist abtriebseitig des Befestigungsflanschs 240 eine zentrische Mantelfläche 215 vorhanden. Im Unterschied zur ersten Ausführungsform ist anstelle eines abtriebseitigen Ritzels ein profilierter Abtriebsschaft 201 dargestellt.

Als zusätzliches Element ist nun zwischen der zentrischen Mantelfläche 215 des an sich bekannten Planetengetriebes und einer kreisförmigen Montageöffnung in einer (hier nicht dargestellten) Montageplatte ein Exzenterflansch 250 angeordnet. Der Exzenterflansch 250 weist eine kreisförmige Aufnahmeöffnung 251 auf, deren Querschnitt der Mantelfläche 215 des Planetengetriebes angepasst ist. Umlaufend weist der Exzenterflansch 250 seinerseits eine Mantelfläche 252 auf, welche ebenfalls kreisförmig, bezüglich der Aufnahmeöffnung 251 aber exzentrisch ist. Wiederum beträgt die Exzentrizität 0.5 mm.

Hinten an die Mantelfläche 252 anschliessend weist der Exzenterflansch 250 einen Befestigungsflanschabschnitt 253 auf. Dieser bildet abtriebseitig eine senkrecht zur zentralen Achse des Planetengetriebes 200 stehende vordere Befestigungsfläche. Im befestigten Zustand liegt diese Befestigungsfläche flächig an einer Montageplatte an und stützt somit das Planetengetriebe 200 auf dieser ab. Die Mantelfläche 252 ist passend in einer kreisförmigen Öffnung der Montageplatte gehalten und stützt somit das Planetengetriebe in allen Richtungen gegen radiale Kräfte ab. Parallel zur zentralen Achse des Planetengetriebes 200 verlaufen im Befestigungsflanschabschnitt 253 vier gleichmässig angeordnete bogenförmige Schlitze 254.1...4 mit einem Sektorwinkel von je 45°. Sie sind in Bezug auf das Rotationszentrum der Mantelfläche 252 symmetrisch angeordnet.

Die Fixierung des Planetengetriebes 200 an der Montageplatte erfolgt mit Hilfe der Schlitze 254.1...4 und vier durch die schlitzartigen Öffnungen des Befestigungsflanschs 240 geführten Schrauben 255. Dazu werden in der Montageplatte acht kreisförmig und gleichmässig beabstandete Gewindeöffnungen vorgesehen. Mittels der vier Schrauben 255 lässt sich dann das Planetengetriebe 200 in allen Drehstellungen des Exzenterflanschs 250 an der Montageplatte festklemmen. Die Geometrie der schlitzartigen Öffnungen im Befestigungsflansch 240 ermöglicht dabei die bei der Einstellung notwendige radiale Bewegung des Planetengetriebes - im einfachsten Fall weisen die Öffnungen eine Ausdehnung auf, die in allen Richtungen den Querschnitt des Schafts der zur Befestigung verwendeten Schrauben 255 übersteigt. Über die Schraubenköpfe und den Befestigungsflansch 240 ist das Planetengetriebe 200 formschlüssig an der Montageplatte gehalten und stützt es gegen axiale Kräfte ab. Torsionskräfte werden über die Klemmung zwischen den Schraubenköpfen und der hinteren Fläche des Befestigungsflanschs 240, der vorderen Fläche des Befestigungsflanschs 240, der beiden Flächen des Exzenterflanschs 250 und der Rückseite der Montageplatte aufgefangen.

Während der Zustellbewegung rotiert - im Gegensatz zum ersten Ausführungsbeispiel - das Planetengetriebe 200 nicht, wird aber das Ende der Schlitze 254.1...4 erreicht, muss das Getriebe um 45° gedreht werden, in das um 45° verdrehte Bohrbild in der Montageplatte.

Die Figur 6 ist eine Schrägansicht einer dritten Ausführungsform des erfindungsgemässen Planetengetriebes 300. Wie bei der zweiten Ausführungsform umfasst dieses ein an sich bekanntes Planetengetriebe mit einem Gehäuse 310, das abtriebseitig einen Befestigungsflansch 340 mit vier parallel zur Längsachse des Planetengetriebes orientierten, durchgehenden schlitzartigen Öffnungen aufweist. Ebenfalls ist abtriebseitig des Befestigungsflanschs 340 eine zentrische Mantelfläche 315 vorhanden, wiederum liegt zudem ein profilierter Abtriebsschaft 301 vor.

Als zusätzliche Elemente weist das Planetengetriebe 300 nun eine Exzenterhülse 360 und einen Klemmflansch 370 auf. Die Exzenterhülse 360 ist zwischen der Mantelfläche 315 des an sich bekannten Planetengetriebes und einer kreisförmigen Montageöffnung in einer (hier nicht dargestellten) Montageplatte angeordnet. Die Exzenterhülse 360 weist eine kreisförmige Aufnahmeöffnung 361 auf, deren Querschnitt der Mantelfläche 315 des Planetengetriebes angepasst ist. Umlaufend weist die Exzenterhülse 360 ihrerseits eine Mantelfläche 362 auf, welche ebenfalls kreisförmig, bezüglich der Aufnahmeöffnung 361 aber exzentrisch ist. Wiederum beträgt die Exzentrizität 0.5 mm. Am hinteren Ende ist an der Mantelfläche 362 ein umlaufender Steg ausgebildet.

Der Klemmflansch 370 ist im Wesentlichen ringförmig und weist eine kreisförmige Aufnahmeöffnung 371 auf, deren Querschnitt der Aussengeometrie der Mantelfläche 362 der Exzenterhülse 360 angepasst ist. Mittels vier Schrauben 365 ist der Klemmflansch mit dem Befestigungsflansch 340 des Planetengetriebes verschraubt. Die Geometrie der schlitzartigen Öffnungen im Befestigungsflansch 340 ermöglicht die bei der weiter unten beschriebenen Feinpositionierung des Planetengetriebes erfolgenden Bewegungen.

Der Klemmflansch 370 weist vier weitere Schraubenöffnungen auf, welche sich in Abschnitten befinden, welche nicht vom Befestigungsflansch 340 des Planetengetriebes abgedeckt werden und somit von hinten zugänglich sind. Mittels vier weiteren Schrauben 372 lässt sich der Klemmflansch 370 und damit das Planetengetriebe an einer Montageplatte befestigen. Dazu werden in der Montageplatte lediglich vier Gewindeöffnungen benötigt, deren Anordnung derjenigen der vier Schraubenöffnungen im Klemmflansch 370 entspricht.

Der Klemmflansch 370 weist weiter einen radial durchgehenden Schlitz 373 auf, welcher einen unmittelbaren Zugriff auf einen Abschnitt der Mantelfläche 362 der Exzenterhülse 360 erlaubt. Der Sektorwinkel des Schlitzes beträgt 22.5°. Im Abschnitt der Mantelfläche 362 sind mehrere radiale Öffnungen mit einem Abstand von 22.5° angeordnet. Mithilfe eines Werkzeugs, z. B. eines Schraubenziehers 40, und dieser Öffnungen lässt sich die Drehstellung der Exzenterhülse 360 verstellen. Erreicht eine Öffnung das Ende des Schlitzes 373, kann in die nächste Öffnung eingegriffen werden. Die Exzenterhülse 360 lässt sich so in jede beliebige Drehstellung bringen.

Zur Montage des Planetengetriebes 300 wird wie folgt vorgegangen: Zunächst wird der Klemmflansch 370 an der Montageplatte mittels der Schrauben 372 fixiert. Das Planetengetriebe wird am Befestigungsflansch 340 über die vier weiteren Schrauben 365 zunächst lose am Klemmflansch 370 befestigt. Anschliessend wird mit Hilfe des Schraubenziehers 40 und der radialen Öffnungen in der Exzenterhülse 360 die Drehstellung der Exzenterhülse 360 und damit die Position der Drehachse des Schafts 301 eingestellt.

Ist die gewünschte Position erreicht, werden die Schrauben 365, mit welchen das Planetengetriebe am Klemmflansch 370 befestigt ist, festgezogen. Die Exzenterhülse 360 ist dadurch über den Steg am hinteren Ende der Mantelfläche 362 zwischen dem Befestigungsflansch 340 des Planetengetriebes und dem Klemmflansch 370 festgeklemmt. Während des Verstellvorgangs erfolgt keine Rotation des Getriebes selbst.

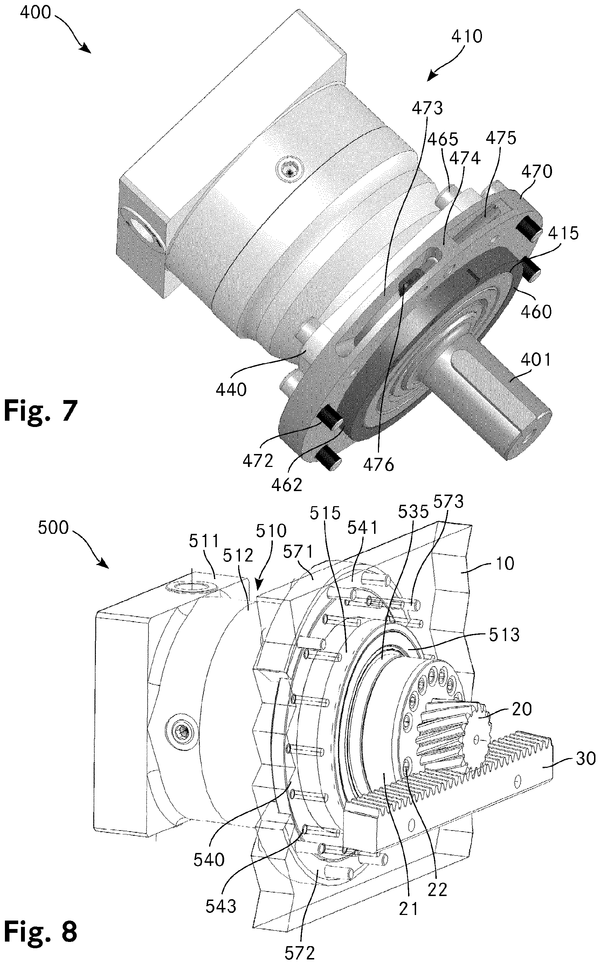

Die Figur 7 ist eine Seitenansicht einer vierten Ausführungsform des erfindungsgemässen Planetengetriebes 400. Wie bei der zweiten und dritten Ausführungsform umfasst dieses ein an sich bekanntes Planetengetriebe mit einem Gehäuse 410, das abtriebseitig einen Befestigungsflansch 440 mit vier parallel zur Längsachse des Planetengetriebes orientierten, durchgehenden schlitzartigen Öffnungen aufweist. Ebenfalls ist abtriebseitig des Befestigungsflanschs 440 eine zentrische Mantelfläche 415 vorhanden, wiederum liegt zudem ein profilierter Abtriebsschaft 401 vor.

Als zusätzliche Elemente weist das Planetengetriebe 400 wiederum eine Exzenterhülse 460 und einen Klemmflansch 470 auf. Die Exzenterhülse 460 ist zwischen der Mantelfläche 415 des an sich bekannten Planetengetriebes und einer kreisförmigen Montageöffnung in einer (hier nicht dargestellten) Montageplatte angeordnet. Die Exzenterhülse 460 weist eine kreisförmige Aufnahmeöffnung auf, deren Querschnitt der Mantelfläche 415 des Planetengetriebes angepasst ist. Umlaufend weist die Exzenterhülse 460 ihrerseits eine Mantelfläche 462 auf, welche ebenfalls kreisförmig, bezüglich der Aufnahmeöffnung aber exzentrisch ist. Wiederum beträgt die Exzentrizität 0.5 mm. Am hinteren Ende ist an der Mantelfläche 462 ein umlaufender Steg ausgebildet.

Der Klemmflansch 470 ist im Wesentlichen ringförmig und weist eine kreisförmige Aufnahmeöffnung auf, deren Querschnitt der Aussengeometrie der Mantelfläche 462 der Exzenterhülse 460 angepasst ist. Mittels vier Schrauben 465 ist der Klemmflansch mit dem Befestigungsflansch 440 des Planetengetriebes verschraubt. Die Geometrie der schlitzartigen Öffnungen im Befestigungsflansch 440 ermöglicht die bei der weiter unten beschriebenen Feinpositionierung des Planetengetriebes erfolgenden Bewegungen.

Der Klemmflansch 470 weist vier weitere Schraubenöffnungen auf, welche sich in Abschnitten befinden, welche nicht vom Befestigungsflansch 440 des Planetengetriebes abgedeckt werden und somit von hinten zugänglich sind. Mittels vier weiteren Schrauben 472 lässt sich der Klemmflansch 470 und damit das Planetengetriebe an einer Montageplatte befestigen. Dazu werden in der Montageplatte lediglich vier Gewindeöffnungen benötigt, deren Anordnung derjenigen der vier Schraubenöffnungen im Klemmflansch 470 entspricht.

Der Klemmflansch 470 weist weiter einen radial durchgehenden Schlitz 473 auf, sein Sektorwinkel beträgt ca. 80°. In einem mittleren Abschnitt des Schlitzes 473 ist ein Quersteg 474 ausgebildet, in welcher eine axiale kreisförmige Öffnung verläuft, die sich bis zu den beiden Stirnseiten des Klemmflanschs 470 erstreckt. In dieser Öffnung ist ein Lager mit einer Gewindeöffnung drehbar gelagert. Mit dieser Gewindeöffnung wirkt eine Stellschraube 475 zusammen. Diese umfasst einen Gewindeabschnitt, an dessen einen Ende ein Schlitz ausgebildet ist. Am anderen Ende ist ein Gelenkkopf 476 angeordnet, mit einem Kopfteil, in welchem der Gewindeabschnitt frei rotiert und einem Gelenkteil, welches relativ zum Kopfteil um eine parallel zur Längsachse des Getriebes verlaufende Achse schwenkbar ist. Der Gelenkteil greift in eine radiale Öffnung in der Mantelfläche 462 der Exzenterhülse 460 ein.

Mithilfe eines Schraubenziehers lässt sich die Position der Stellschraube 475 relativ zum drehbaren Lager verstellen. Damit wird auch die Drehstellung der Exzenterhülse 460 und damit die Position der Drehachse des Schafts 301 eingestellt. Auch hier wird ein Verstellweg von 90° ermöglicht.

Die Figur 8 ist eine Schrägansicht einer fünften Ausführungsform des erfindungsgemässen Planetengetriebes 500. Sie entspricht in vielerlei Hinsicht der ersten Ausführungsform.

Das Planetengetriebe 500 ist in einer Montageplatte 10 gelagert. Die Montageplatte 10 ist beispielsweise Teil eines Maschinengestells oder eines Maschinengehäuses. Im dargestellten Ausführungsbeispiel ist am Planetengetriebe 500 abtriebseitig ein Ritzel 20 befestigt. Dieses Ritzel 20 wirkt mit einer Zahnstange 30 zusammen.

In an sich bekannter Weise umfasst das Planetengetriebe 500 ein Gehäuse 510 mit einem antriebseitigen Gehäuseteil 511 und einem unmittelbar daran anschliessenden abtriebseitigen Gehäuseteil 512. Der antriebseitige Gehäuseteil weist einen hinteren (antriebseitigen) Abschnitt mit im Wesentlichen quadratischem Querschnitt und einen vorderen (abtriebseitigen) Abschnitt mit im Wesentlichen kreisförmigem Querschnitt auf. Im antriebseitigen Gehäuseteil 511 ist ein Kupplungsteil zur Aufnahme einer Motorwelle aufgenommen, im abtriebseitigen Gehäuseteil 512 sind die Elemente des eigentlichen Planetengetriebes aufgenommen. Entsprechende Planetengetriebe sind allgemein bekannt, somit erübrigt sich eine nähere Beschreibung dieser Komponenten. Die Lagerung des Planetenradträgers über Kegelrollenlager entspricht derjenigen bei der ersten Ausführungsform.

Am vorderen Ende des Planetenradträgers ist eine Befestigungsplatte 535 angeordnet. Diese weist umlaufend regelmässig beabstandete Gewindeöffnungen auf. Über diese Gewindeöffnungen ist stirnseitig eine Halteplatte 21 mittels Schrauben 22 fest mit der Befestigungsplatte 535 verbunden. In der Halteplatte 21 ist das Ritzel 20 befestigt, z. B. eingeschrumpft.

Zwischen der Befestigungsplatte 535 und dem abtriebseitigen Ende des abtriebseitigen Gehäuseteils 512 ist eine Ringdichtung 513 aufgenommen. Sie dichtet den Bereich der Kegelrollenlager nach aussen hin ab.

Das Planetengetriebe 500 umfasst an seinem abtriebseitigen Gehäuseteil 512 einen damit einstückig ausgebildeten, umlaufenden, ringförmigen Befestigungsflansch 540. Dieser weist eine senkrecht zur zentralen Achse des Planetengetriebes 500 stehende vordere (abtriebseitige) Befestigungsfläche 541 auf. Der abtriebseitige Gehäuseteil 512 weist abtriebseitig des Befestigungsflanschs 540 zudem eine Mantelfläche 515 auf. Im befestigten Zustand liegt die Befestigungsfläche 541 flächig an der Montageplatte 10 an und stützt somit das Planetengetriebe 500 auf der Montageplatte 10 ab. Die Mantelfläche 515 ist passend in einer kreisförmigen Öffnung der Montageplatte 10 gehalten und stützt somit das Planetengetriebe in allen Richtungen gegen radiale Kräfte ab. Im Befestigungsflansch 540 ist eine Mehrzahl von axial durchgehenden Löchern 543 angeordnet.

Der Befestigungsflansch 540 sowie die Mantelfläche 515 sind bezüglich der zentralen Achse des Planetengetriebes 500 und damit der Drehachse des Ritzels 20 exzentrisch ausgebildet, d. h. die Mantelfläche 515, der umlaufende Rand des Befestigungsflanschs 540 und die Löcher 543 sind kreissymmetrisch zu einer Achse angeordnet, welche einen Abstand zur zentralen Achse des Planetengetriebes 500 und damit zur Drehachse des Ritzels 20 aufweist. Der Abstand beträgt im gezeigten Ausführungsbeispiel 0.5 mm. Dies erlaubt eine Einstellung des Abstands des Ritzels 20 zur Zahnstange 30, indem das Planetengetriebe 500 relativ zur Montageplatte 10 um die Symmetrieachse des Befestigungflanschs 540 bzw. der Mantelfläche 515 verdreht wird.

Weiter umfasst das Planetengetriebe 500 zwei Klemmsegmente 571, 572. Diese haben einen L-förmigen Querschnitt mit zwei senkrecht zueinander stehenden Schenkeln und erstrecken sich über einen Sektorwinkel von ca. 120°. Die Querschnittsgeometrie ist derart ausgebildet, dass die Aussenkontur des Befestigungsflanschs 540 passend zwischen den beiden Schenkeln aufgenommen werden kann. Beide Segmente umfassen ja vier axiale Durchgangslöcher, so dass sie mit Hilfe von Schrauben 573, die mit entsprechend angeordneten Gewindelöchern in der Montageplatte 10 zusammenwirken, an der Montageplatte 10 befestigt werden können.

Die Mittellinien der beiden Klemmsegmente 571, 572 sind in einem Winkel von 90° zur Längsachse der Zahnstange 30 angeordnet, um die Radialkräfte des Zahneingriffs bestmöglich aufzunehmen.

Die Fixierung des Planetengetriebes 500 an der Montageplatte 10 erfolgt je nach Anwendung mit Hilfe der Schrauben 573 und der beiden Klemmsegmente 571, 572 oder mit Hilfe der axialen Löcher 543 im Befestigungsflansch 540:
a) Falls eine Verstellung des Abstands gewünscht ist, werden in der Montageplatte 2x4 Gewindelöcher vorgesehen, deren Anordnung jeweils derjenigen der Durchgangslöcher eines der Klemmsegmente 571, 572 entspricht. Mittels acht durch die Durchgangslöcher geführter Schrauben 573 lässt sich dann das Planetengetriebe 500 in allen Drehstellungen an der Montageplatte 10 festklemmen. Über die Schraubenköpfe und den Befestigungsflansch 540 ist das Planetengetriebe formschlüssig an der Montageplatte 10 gehalten und stützt es gegen axiale Kräfte ab. Torsionskräfte werden über die Klemmung zwischen den Schraubenköpfen und der hinteren Fläche der Klemmsegmente 571, 572, zwischen dem radialen Schenkel der Klemmsegemente 571, 572 und der hinteren Fläche des Befestigungsflanschs 540 sowie zwischen der Befestigungsfläche 541 und der Rückseite der Montageplatte aufgefangen.
b) Ist keine Verstellung des Abstands gewünscht, können die axialen Löcher 543 im Befestigungsflansch 540 zur Befestigung dienen. In der Montageplatte 10 wird dann ein entsprechendes Bohrbild benötigt. Die Klemmsegmente 571, 572 werden in diesem Fall nicht benötigt.

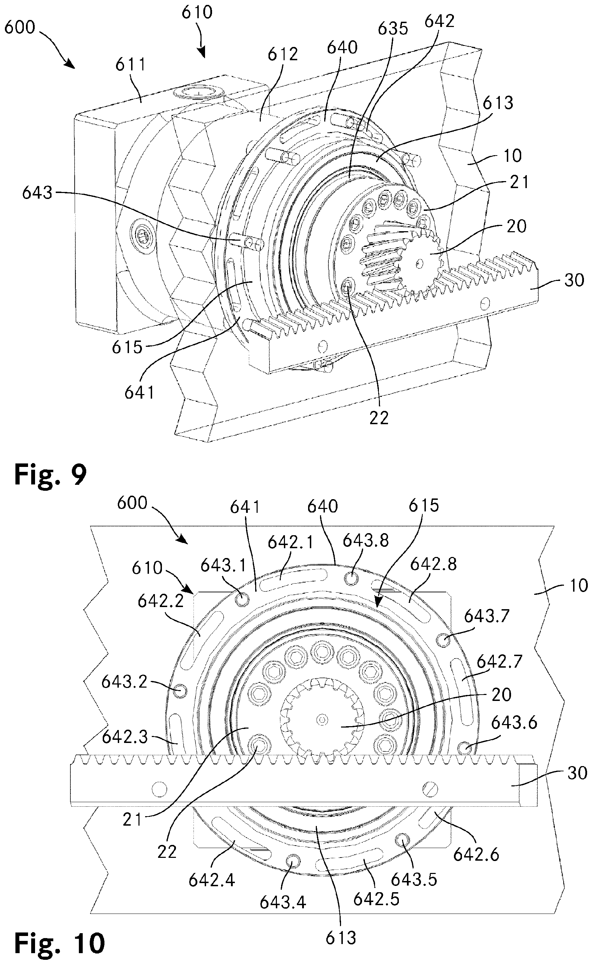

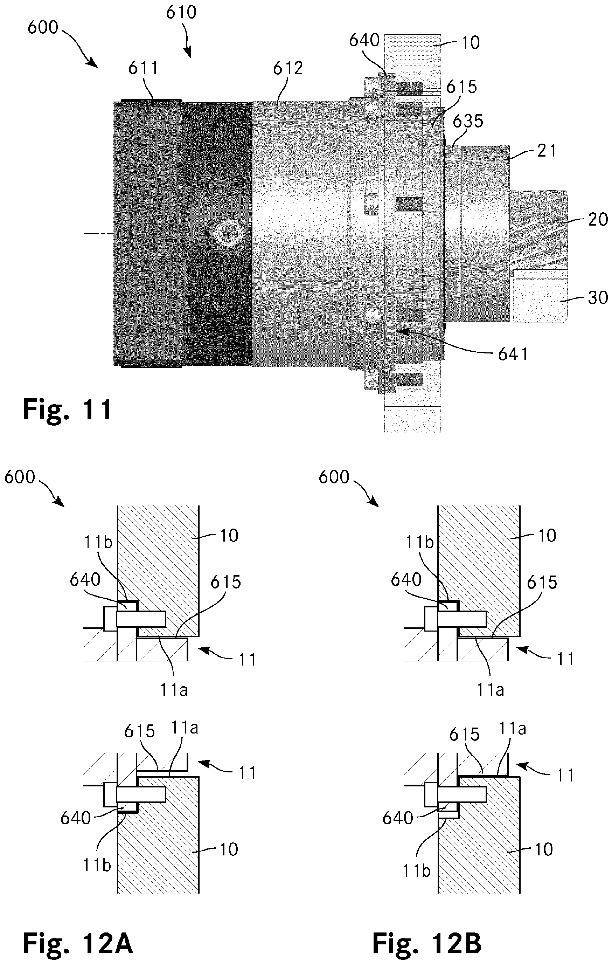

Die Figur 9 ist eine Schrägansicht einer sechsten Ausführungsform des erfindungsgemässen Planetengetriebes, die Figur 10 zeigt eine Frontansicht, die Figur 11 eine Seitenansicht und die Figuren 12A, B Schnittbilder eines Teilbereichs, entlang der zentralen Achse des Getriebes. Wiederum entspricht das Planetengetriebe 600 in vielerlei Hinsicht der ersten Ausführungsform.

Das Planetengetriebe 600 ist in einer Montageplatte 10 gelagert. Die Montageplatte 10 ist beispielsweise Teil eines Maschinengestells oder eines Maschinengehäuses. Im dargestellten Ausführungsbeispiel ist am Planetengetriebe 600 abtriebseitig ein Ritzel 20 befestigt. Dieses Ritzel 20 wirkt mit einer Zahnstange 30 zusammen.

In an sich bekannter Weise umfasst das Planetengetriebe 600 ein Gehäuse 610 mit einem antriebseitigen Gehäuseteil 611 und einem unmittelbar daran anschliessenden abtriebseitigen Gehäuseteil 612. Der antriebseitige Gehäuseteil weist einen hinteren (antriebseitigen) Abschnitt mit im Wesentlichen quadratischem Querschnitt und einen vorderen (abtriebseitigen) Abschnitt mit im Wesentlichen kreisförmigem Querschnitt auf. Im antriebseitigen Gehäuseteil 611 ist ein Kupplungsteil zur Aufnahme einer Motorwelle aufgenommen, im abtriebseitigen Gehäuseteil 612 sind die Elemente des eigentlichen Planetengetriebes aufgenommen. Entsprechende Planetengetriebe sind allgemein bekannt, somit erübrigt sich eine nähere Beschreibung dieser Komponenten. Die Lagerung des Planetenradträgers entspricht derjenigen bei der ersten Ausführungsform.

Am vorderen Ende des Planetenradträgers ist eine Befestigungsplatte 635 angeordnet. Diese weist umlaufend regelmässig beabstandete Gewindeöffnungen auf. Über diese Gewindeöffnungen ist stirnseitig eine Halteplatte 21 mittels Schrauben 22 fest mit der Befestigungsplatte 635 verbunden. In der Halteplatte 21 ist das Ritzel 20 befestigt, z. B. eingeschrumpft.

Zwischen der Befestigungsplatte 635 und dem abtriebseitigen Ende des abtriebseitigen Gehäuseteils 612 ist eine Ringdichtung 613 aufgenommen. Sie dichtet den Bereich der Kegelrollenlager nach aussen hin ab.

Das Planetengetriebe 600 umfasst an seinem abtriebseitigen Gehäuseteil 612 einen damit einstückig ausgebildeten, umlaufenden, ringförmigen Befestigungsflansch 640. Dieser weist eine senkrecht zur zentralen Achse des Planetengetriebes 600 stehende vordere (abtriebseitige) Befestigungsfläche 641 auf. Der abtriebseitige Gehäuseteil 612 weist abtriebseitig des Befestigungsflanschs 640 zudem eine Mantelfläche 615 auf.

Im Befestigungsflansch 640 verläuft eine Mehrzahl von axial durchgehenden Öffnungen, nämlich acht gleichmässig angeordnete bogenförmige Schlitze 642.1...8 mit einem Sektorwinkel von je 22.5° sowie acht kreisrunde Löcher 643.1...8, welche jeweils mittig zwischen den Schlitzen 642.1...8 angeordnet sind.

Die Mantelfläche 615 ist bezüglich der zentralen Achse des Planetengetriebes 600 und damit der Drehachse des Ritzels 20 exzentrisch ausgebildet, d. h. die Mantelfläche 615 ist kreissymmetrisch zu einer Achse angeordnet, welche einen Abstand zur zentralen Achse des Planetengetriebes 600 und damit zur Drehachse des Ritzels 20 aufweist. Der Abstand beträgt im gezeigten Ausführungsbeispiel 0.5 mm.

Die Schlitze 642 im Befestigungsflansch 140 sind in derselben Weise exzentrisch angeordnet. Der Befestigungsflansch 640, namentlich seine Aussenkontur, sowie die Löcher 643 sind dagegen zentrisch ausgebildet, d. h. rotationssymmetrisch zur zentralen Achse des Planetengetriebes 600 und damit zur Drehachse des Ritzels 20.

Das Getriebe kann so universell einerseits für Anwendungen verwendet werden, die eine radiale Zustellung erfordern (z. B. Zahnstangen-, Riemen- oder Kettentriebe), andererseits für Anwendungen wo eine koaxiale Ausrichtung der Abtriebswelle zur Zentrierbohrung von Wichtigkeit ist (Spindelantriebe oder beim Direktanbau von prozessspezifischen Rotationselementen). Je nach Anwendung wird eine anders gestaltete Öffnung in der Montageplatte 10 verwendet, deren Geometrie der Aussenfläche des Befestigungsflanschs 640 (für die zentrische Montage) oder der Mantelfläche 615 (für die zustellbare, exzentrische Montage) angepasst ist:
a) Falls eine Verstellung des Abstands gewünscht ist, werden in der Montageplatte 10 sechzehn kreisförmig und gleichmässig beabstandete Gewindeöffnungen vorgesehen. Mittels acht durch die acht Schlitze 642.1...8 geführter Schrauben lässt sich dann das Planetengetriebe 600 in allen Drehstellungen an der Montageplatte 10 festklemmen, wobei je nach Drehlage eine erste oder eine zweite Gruppe von je in einem Abstand von 45° positionierten acht Löchern in der Montageplatte 10 verwendet wird. Über die Schraubenköpfe und den Befestigungsflansch 640 ist das Planetengetriebe formschlüssig an der Montageplatte 10 gehalten und stützt es gegen axiale Kräfte ab. Torsionskräfte werden über die Klemmung zwischen den Schraubenköpfen und der hinteren Fläche des Befestigungsflanschs 640 bzw. zwischen der Befestigungsfläche 641 und der Rückseite der Montageplatte aufgefangen.
b) Ist keine Verstellung des Abstands gewünscht, müssen in der Montageplatte 10 nur acht kreisförmig und gleichmässig beabstandete Gewindeöffnungen vorgesehen werden. Mittels acht durch die acht Löcher 643.1...8 geführter Schrauben lässt sich dann das Planetengetriebe 100 in an sich bekannter Weise drehfest an der Montageplatte 10 befestigen. Auch Torsionskräfte werden so durch Formschluss aufgefangen.

Die Mantelfläche 615, welche bei der Variante a) passend in der Montageplatte 10 aufgenommen ist, befindet sich näher beim Abtrieb als die Aussenkontur des Befestigungsflanschs 640 und kann so die signifikanten Radialkräfte, welche bei entsprechenden Anwendungen zu erwarten sind, besonders gut aufnehmen. Bei der Variante b) erfolgt die Aufnahme der (in der Regel geringeren) Radialkräfte über den etwas weiter vom Abtrieb entfernten Befestigungsflansch 640.

Die Figuren 12A, B zeigen Schnittbilder durch denjenigen Bereich, in welchem das Planetengetriebe 600 in der Montageplatte 10 gehalten ist. Die Montageplatte 10 umfasst zur Aufnahme des Planetengetriebes 600 eine Öffnung 11. Diese weist eine vordere (abtriebseitige) zylindrische Begrenzungsfläche 11a und eine hintere (antriebseitige) zylindrische Begrenzungsfläche 11b auf. Der Radius ist im Bereich der hinteren Begrenzungsfläche 11b grösser als im Bereich der vorderen Begrenzungsfläche 11a.

Bei der in der Figur 12A gezeigten Situation, in welcher das Planetengetriebe 600 zentrisch, d. h. ortsfest, in der Montageplatte 10 gehalten ist, wirkt die Montageplatte 10 umlaufend im Bereich der hinteren Begrenzungsfläche 11b mit der Aussenseite des Befestigungsflanschs 640 zusammen. Auf das Planetengetriebe 600 wirkende radiale Kräfte können somit unabhängig von ihrer Richtung unmittelbar von der Montageplatte 10 aufgenommen werden. Im Bereich der vorderen Begrenzungsfläche 11a ist der Radius so gewählt, dass die Mantelfläche 615 des Planetengetriebes 600 unabhängig von der Drehstellung in der Öffnung 11 Platz findet. Die Öffnung kann im Bereich der vorderen Begrenzungsfläche 11a so dimensioniert werden, dass in einer Richtung (oben in Figur 12A) die Mantelfläche 615 die Umrandung kontaktiert, so dass Kräfte, welche in diese Richtung wirken, auch im Bereich der vorderen Begrenzungsfläche 11a auf die Montageplatte 10 übertragen werden können.

Müssen grosse Radialkräfte aufgenommen werden, kann die Öffnung 11 in der Montageplatte 10 so ausgeführt werden, dass - in einer vorgegebenen Drehstellung des Planetengetriebes 600 - auch im Bereich der Mantelfläche 615 ein umlaufender Kontakt stattfindet, d. h. die vordere und die hintere Begrenzungsfläche sind entsprechend des Abstands zwischen der zentralen Achse des Planetengetriebes 600 und der Drehachse des Ritzels exzentrisch ausgeführt.

Bei der in der Figur 12B gezeigten Situation, in welcher das Planetengetriebe 600 exzentrisch, d. h. in Bezug auf eine radiale Position der Drehachse des Abtriebsritzels verstellbar, in der Montageplatte 10 gehalten ist, wirkt die Montageplatte 10 umlaufend im Bereich der vorderen Begrenzungsfläche 11a mit der Mantelfläche 615 des Planetengetriebes 600 zusammen. Auf das Planetengetriebe 600 wirkende Kräfte können somit unabhängig von ihrer Richtung unmittelbar von der Montageplatte 10 aufgenommen werden. Im Bereich der hinteren Begrenzungsfläche 11b ist der Radius so gewählt, dass die Aussenfläche des Befestigungsflanschs 640 unabhängig von der Drehstellung in der Öffnung 11 Platz findet.

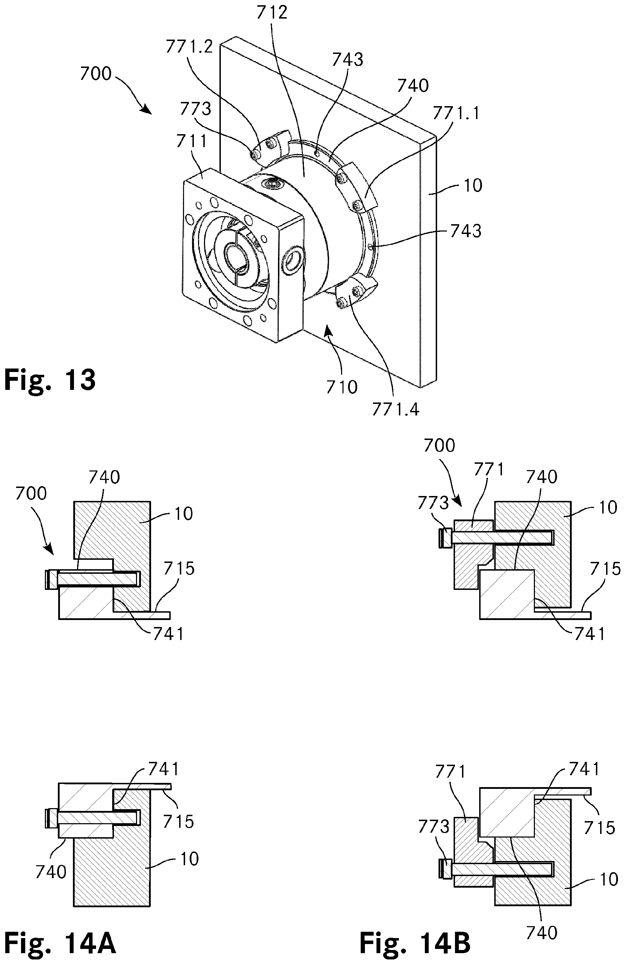

Die Figur 13 ist eine Schrägansicht einer siebten Ausführungsform des erfindungsgemässen Planetengetriebes. Die Figuren 14A, B zeigen Schnittbilder der siebten Ausführungsform. Die siebte Ausführungsform entspricht in vielerlei Hinsicht der fünften Ausführungsform, welche oben im Zusammenhang mit der Figur 8 beschrieben ist.

Das Planetengetriebe 700 ist in einer Montageplatte 10 gelagert. Die Montageplatte 10 ist beispielsweise Teil eines Maschinengestells oder eines Maschinengehäuses. Am Planetengetriebe 700 ist abtriebseitig beispielsweise ein Ritzel zum Zusammenwirken mit einer Zahnstange befestigt.

In an sich bekannter Weise umfasst das Planetengetriebe 700 ein Gehäuse 710 mit einem antriebseitigen Gehäuseteil 711 und einem unmittelbar daran anschliessenden abtriebseitigen Gehäuseteil 712. Der antriebseitige Gehäuseteil weist einen hinteren (antriebseitigen) Abschnitt mit im Wesentlichen quadratischem Querschnitt und einen vorderen (abtriebseitigen) Abschnitt mit im Wesentlichen kreisförmigem Querschnitt auf. Im antriebseitigen Gehäuseteil 711 ist ein Kupplungsteil zur Aufnahme einer Motorwelle aufgenommen, im abtriebseitigen Gehäuseteil 712 sind die Elemente des eigentlichen Planetengetriebes aufgenommen. Entsprechende Planetengetriebe sind allgemein bekannt, somit erübrigt sich eine nähere Beschreibung dieser Komponenten. Die Lagerung des Planetenradträgers über Kegelrollenlager entspricht derjenigen bei der ersten Ausführungsform.

Die Befestigung des Ritzels (oder anderer Abtriebselemente) erfolgt wie bei der fünften Ausführungsform und ist deshalb nicht näher beschrieben.

Das Planetengetriebe 700 umfasst an seinem abtriebseitigen Gehäuseteil 712 einen damit einstückig ausgebildeten, umlaufenden, ringförmigen Befestigungsflansch 740. Dieser weist eine senkrecht zur zentralen Achse des Planetengetriebes 700 stehende vordere (abtriebseitige) Befestigungsfläche 741 auf. Der abtriebseitige Gehäuseteil 712 weist abtriebseitig des Befestigungsflanschs 740 zudem eine Mantelfläche 715 auf (vgl. Fig. 14A, B). Im befestigten Zustand liegt die Befestigungsfläche 741 flächig an der Montageplatte 10 an und stützt somit das Planetengetriebe 700 auf der Montageplatte 10 ab. Die Mantelfläche 715 ist passend in einer kreisförmigen Öffnung der Montageplatte 10 gehalten und stützt somit das Planetengetriebe in allen Richtungen gegen radiale Kräfte ab. Im Befestigungsflansch 740 ist eine Mehrzahl von axial durchgehenden Löchern 743 angeordnet.

Der Befestigungsflansch 740 ist bezüglich der zentralen Achse des Planetengetriebes 700 und damit der Drehachse des Ritzels exzentrisch ausgebildet, d. h. der umlaufende Rand des Befestigungsflanschs 740 und die Löcher 743 sind kreissymmetrisch zu einer Achse angeordnet, welche einen Abstand zur zentralen Achse des Planetengetriebes 700 und damit zur Drehachse des Ritzels 20 aufweist. Der Abstand beträgt im gezeigten Ausführungsbeispiel 0.5 mm. Dies erlaubt bei einer Befestigung über den Befestigungsflansch 740 eine Einstellung des Abstands des Ritzels zur Zahnstange, indem das Planetengetriebe 700 relativ zur Montageplatte 10 um die Symmetrieachse des Befestigungflanschs 740 verdreht wird.

Im Gegensatz zum Befestigungsflansch 740 ist die Mantelfläche 715 bezüglich der zentralen Achse des Planetengetriebes 700 und damit der Drehachse des Ritzels zentrisch ausgebildet.

Weiter umfasst das Planetengetriebe 700 vier Klemmpratzen 771.1...4 (wovon drei in der Figur 13 sichtbar sind). Diese haben einen L-förmigen Querschnitt mit zwei senkrecht zueinander stehenden Schenkeln und decken je einen Sektorwinkel des Befestigungsflanschs 740 von ca. 30° ab. Die Querschnittsgeometrie ist derart ausgebildet, dass die Aussenkontur des Befestigungsflanschs 740 passend zwischen den beiden Schenkeln aufgenommen werden kann. Alle vier Klemmpratzen 771.1...4 umfassen ja zwei axiale Durchgangslöcher, so dass sie mit Hilfe von Schrauben 773, die mit entsprechend angeordneten Gewindelöchern in der Montageplatte 10 zusammenwirken, an der Montageplatte 10 befestigt werden können. Die Klemmpratzen 771.1...4 sind in einem Winkelabstand von je 90° zueinander angeordnet. Es ergibt sich eine Geometrie, bei welcher sich das Planetengetriebe 700 und die vier Klemmpratzen 771.1...4 auf einer quadratischen Fläche der Montageplatte 10 anordnen lassen, deren Seitenlänge den Durchmesser des Befestigungsflanschs 740 nur geringfügig übertrifft.

Die Fixierung des Planetengetriebes 700 an der Montageplatte 10 erfolgt je nach Anwendung mit Hilfe der Schrauben 773 und den vier Klemmpratzen 771.1...4 oder direkt mit Hilfe der axialen Löcher 743 im Befestigungsflansch 740:
a) Falls eine Verstellung des Abstands gewünscht ist, werden in der Montageplatte 4x2 Gewindelöcher vorgesehen, deren Anordnung jeweils derjenigen der Durchgangslöcher einer der Klemmpratzen 771.1...771.4 entspricht. Mittels acht durch die Durchgangslöcher geführter Schrauben 773 lässt sich dann das Planetengetriebe 500 in allen Drehstellungen an der Montageplatte 10 festklemmen. Über die Schraubenköpfe und den Befestigungsflansch 740 ist das Planetengetriebe formschlüssig an der Montageplatte 10 gehalten und stützt es gegen axiale Kräfte ab. Torsionskräfte werden über die Klemmung zwischen den Schraubenköpfen und der hinteren Fläche der Klemmpratzen 771.1...4, zwischen dem radialen Schenkel der Klemmpratzen 771.1...4 und der hinteren Fläche des Befestigungsflanschs 740 sowie zwischen der stirnseitigen Befestigungsfläche und der Rückseite der Montageplatte 10 aufgefangen (vgl. Figur 14B).
b) Ist keine Verstellung des Abstands gewünscht, können die axialen Löcher 743 im Befestigungsflansch 740 zur Befestigung dienen. In der Montageplatte 10 wird dann ein entsprechendes Bohrbild benötigt. Die Klemmpratzen 771.1...4 kommen in diesem Fall nicht zum Einsatz. Die abtriebseitige Mantelfläche 715 wirkt dabei umlaufend mit einer Befestigungsöffnung in der Montageplatte 10 zusammen (vgl. Figur 14A).

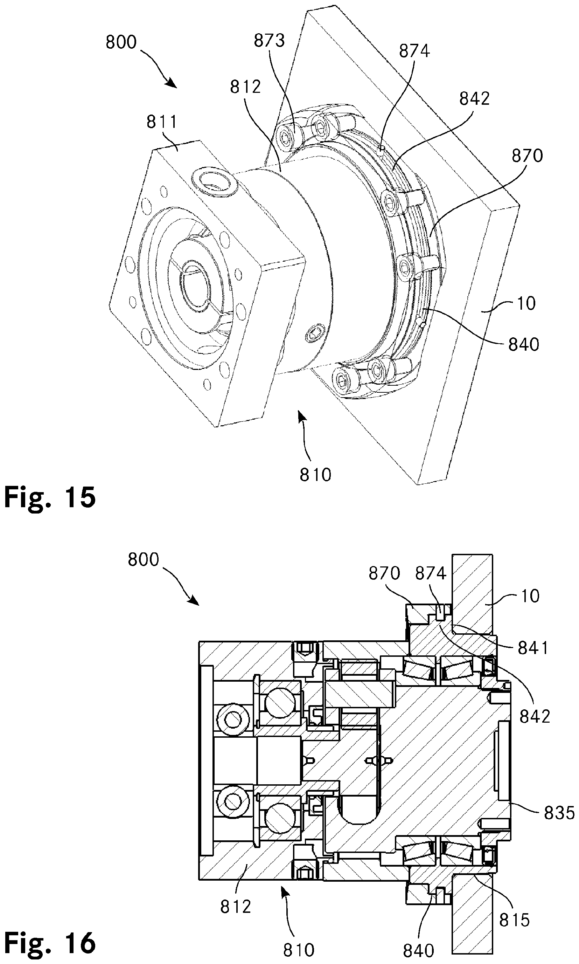

Die Figur 15 ist eine Schrägansicht einer achten Ausführungsform des erfindungsgemässen Planetengetriebes. Die Figur 16 zeigt ein Schnittbild der achten Ausführungsform.

Das Planetengetriebe 800 ist in einer Montageplatte 10 gelagert. Die Montageplatte 10 ist beispielsweise Teil eines Maschinengestells oder eines Maschinengehäuses Am Planetengetriebe 800 ist abtriebseitig beispielsweise ein Ritzel zum Zusammenwirken mit einer Zahnstange befestigt.

In an sich bekannter Weise umfasst das Planetengetriebe 800 ein Gehäuse 810 mit einem antriebseitigen Gehäuseteil 811 und einem unmittelbar daran anschliessenden abtriebseitigen Gehäuseteil 812. Der antriebseitige Gehäuseteil weist einen hinteren (antriebseitigen) Abschnitt mit im Wesentlichen quadratischem Querschnitt und einen vorderen (abtriebseitigen) Abschnitt mit im Wesentlichen kreisförmigem Querschnitt auf. Im antriebseitigen Gehäuseteil 811 ist ein Kupplungsteil zur Aufnahme einer Motorwelle aufgenommen, im abtriebseitigen Gehäuseteil 812 sind die Elemente des eigentlichen Planetengetriebes aufgenommen. Entsprechende Planetengetriebe sind allgemein bekannt, somit erübrigt sich eine nähere Beschreibung dieser Komponenten. Die Lagerung des Planetenradträgers über Kegelrollenlager entspricht derjenigen bei der ersten Ausführungsform.

Am vorderen Ende des Planetenradträgers ist eine Befestigungsplatte 835 angeordnet. Diese weist umlaufend regelmässig beabstandete Gewindeöffnungen auf. Über diese Gewindeöffnungen kann stirnseitig eine Halteplatte mittels Schrauben fest mit der Befestigungsplatte verbunden werden. In der Halteplatte ist das Ritzel befestigt, z. B. eingeschrumpft. Zwischen der Befestigungsplatte und dem abtriebseitigen Ende des abtriebseitigen Gehäuseteils ist eine Ringdichtung aufgenommen. Sie dichtet den Bereich der Kegelrollenlager nach aussen hin ab.

Das Planetengetriebe 800 umfasst an seinem abtriebseitigen Gehäuseteil 812 einen damit einstückig ausgebildeten, umlaufenden, ringförmigen Befestigungsflansch 840. Dieser weist eine senkrecht zur zentralen Achse des Planetengetriebes 800 stehende vordere (abtriebseitige) Befestigungsfläche 841 auf. Der abtriebseitige Gehäuseteil 812 weist abtriebseitig des Befestigungsflanschs 840 zudem eine Mantelfläche 815 auf. Im befestigten Zustand liegt die Befestigungsfläche 841 flächig an der Montageplatte 10 an und stützt somit das Planetengetriebe 800 auf der Montageplatte 10 ab. Die Mantelfläche 815 ist passend in einer kreisförmigen Öffnung der Montageplatte 10 gehalten und stützt somit das Planetengetriebe in allen Richtungen gegen radiale Kräfte ab.

Der Befestigungsflansch 840 sowie die Mantelfläche 815 sind bezüglich der zentralen Achse des Planetengetriebes 800 und damit der Drehachse des Ritzels exzentrisch ausgebildet, d. h. die Mantelfläche 815 und der umlaufende Rand des Befestigungsflanschs 840 sind kreissymmetrisch zu einer Achse angeordnet, welche einen Abstand zur zentralen Achse des Planetengetriebes 800 und damit zur Drehachse des Ritzels aufweist. Der Abstand hängt von den Dimensionen des Planetengetriebes ab. Bei verschiedenen Baugrössen ergeben sich folgende Abstände:

| Durchmesser Montageplatte [mm] | grösste Standard-Zahnstange | Exzenter [mm] | Positionsversatz für Montage [mm] |
|---|---|---|---|
| 70 | Modul 2 | 2.2 | 2.0 |
| 90 | Modul 3 | 3.3 | 3.0 |
| 130 | Modul 4 | 4.4 | 4.0 |
| 160 | Modul 5 | 5.5 | 5.0 |
| 200 | Modul 6 | 6.6 | 6.0 |

Dies erlaubt eine Einstellung des Abstands des Ritzels zur Zahnstange, indem das Planetengetriebe 800 relativ zur Montageplatte 10 um die Symmetrieachse der Mantelfläche 815 verdreht wird.

Die Befestigung des Planetengetriebes 800 an der Montageplatte 10 erfolgt mittels eines unverlierbar am Planetengetriebe 800 gehaltenen Klemmflansch 870. Er ist in der Figur 15 der Übersicht halber transparent dargestellt. Der Klemmflansch weist einen kreisförmigen Innenmantel auf, welcher den Befestigungsflansch 840 umschliesst. Der Innenquerschnitt ist im Wesentlichen L-förmig, wobei ein abtriebseitiger Abschnitt einen grösseren Innendurchmesser aufweist als ein antriebseitiger Abschnitt. Der abtriebseitige Abschnitt wirkt mit der Mantelfläche des Befestigungsflanschs 840 zusammen. Auf der Aussenseite weist der Klemmflansch 840 vier gleichmässig entlang des Umfangs angeordnete bogenförmige Abschnitte auf, welche sich über einen Winkel von je ca. 45° erstrecken und welche je zwei Durchgangsöffnungen aufweisen. Zwischen den bogenförmigen Abschnitten verlaufen gerade Abschnitte, so dass an der Montageplatte 10 eine quadratische Fläche benötigt wird, deren Seitenlänge den Aussendurchmesser des Planetengetriebes 800 nur geringfügig übersteigt. Über acht durch die Durchgangsöffnungen verlaufende Schrauben 873 kann der Klemmflansch 870 und damit das Planetengetriebe 800 an der Montageplatte 10 befestigt werden.

Zum Halten des Klemmflansches 870 am Planetengetriebe 800 sind in einem Winkelabstand von jeweils 90° vier radial orientierte Stifte 874 in den Klemmflansch 870 eingepresst. Sie wirken mit einer Nut 842 in der Mantelfläche des Befestigungsflanschs 840 zusammen. Dies sorgt dafür, dass der Klemmflansch 870 axial gesichert und somit unverlierbar am Planetengetriebe 800 gehalten ist.

Die Stirnfläche des hinteren Abschnitts des Klemmflansches 870 wirkt aufgrund seiner Materialwahl und Geometrie als elastisches Element, in der Art einer Tellerfeder. Es ergibt sich somit eine vorgegebene Festhaltekraft. So wird erreicht, dass die vordere Stirnseite des Klemmflansches 870 bündig auf der umgebenden Struktur der Montageplatte 10 aufliegen kann.

Die gemäss der obigen Tabelle vorhandene relativ grosse Exzentrizität ermöglicht eine vereinfachte Montage des Getriebes, namentlich dann, wenn ein Getriebe bei der Herstellung bereits vormontiert werden soll. Mit herkömmlichen Getrieben, die ein Ritzel tragen, welches mit einer Zahnstange zusammenwirken soll, ist es oft notwendig, vor dem Endaufbau das Planetengetriebe zu demontieren, damit die Ritzel aus der Zahnstange ausgerückt und später wieder eingerückt werden können. Aufgrund der grossen Exzentrizität lässt sich nun das Ritzel bei dem Planetengetriebe gemäss der achten Ausführungsform durch eine Drehung des Planetengetriebes 800 um (nahezu) 180° aus der Zahnstange ausrücken. Dazu müssen die acht Befestigungsschrauben 873 nur leicht gelöst werden.

Der um 10% gegenüber dem Modul der Zahnstange erhöhte Betrag der Exzentrizität erlaubt bei der Feinjustage in der finalen Position nach wie vor den Ausgleich von Herstelltoleranzen an den Bauteilen, wie auch die Kompensation von Abweichungen bei der kundenseitigen Montageposition der Zahnstange. Gleichzeitig stellt er einen genügenden Freiraum für das ausgrückte Ritzel sicher und erlaubt damit das sichere Ausfahren des Ritzels aus der Zahnstange.

Beim Planetengetriebe 800 gemäss der achten Ausführungsform werden im Gegensatz zu den vorher beschriebenen Ausführungsformen für zentrische Anwendungen und für exzentrische Anwendungen unterschiedliche Produkte verwendet.

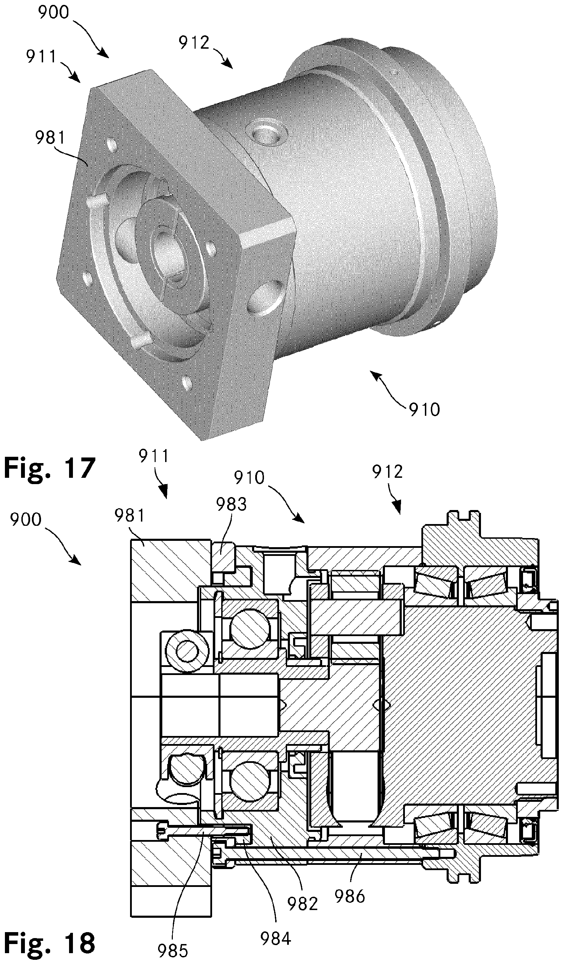

Die Figur 17 ist eine Schrägansicht eines erfindungsgemässen Planetengetriebes mit einem Motorbefestigungsflansch. Die Figur 18 zeigt ein Schnittbild des Planetengetriebes mit Motorbefestigungsflansch. Der Motorbefestigungsflansch kann mit allen acht vorher beschriebenen Ausführungsformen verwendet werden. Das Planetengetriebe 900 wird somit im Zusammenhang mit den Figuren 18 und 19 nicht nochmals beschrieben, es umfasst wiederum ein Gehäuse 910 mit einem antriebseitigen Gehäuseteil 911 und einem unmittelbar daran anschliessenden abtriebseitigen Gehäuseteil 912.

Der antreibsseitige Gehäuseteil 911 umfasst nun einen Befestigungsflansch 981 für einen Motor. Dieser hat eine quadratische Aussenform und umfasst Befestigungselemente zur Anbringung des Motors. Er umfasst weiter eine radiale Durchgangsöffnung zum Zugang zu einer Klemmschraube auf der Welle des Planetengetriebes 900.

Der Befestigungsflansch 981 ist mittels vier Schrauben 985 mit einem Drehring 984 verbunden. Der Drehring ist drehbar zwischen einem hinteren Gehäusabschnitt 982 des antriebseitigen Gehäuseteils 911 und einem Stützflansch 983 angeordnet, wobei der Stützflansch 983, der hintere Gehäuseabschnitt 982 und die weiteren Teile des Gehäuses 910 des Getriebes 900 mittels einer Reihe von axialen Schrauben 986 aneinander befestigt sind.

Der Befestigungsflansch 981 ist zunächst dank des Drehrings 984 lose gegenüber dem Gehäuse 910 des Getriebes 900 drehbar. Werden die vier Schrauben 985 festgezogen, wird der Befestigungsflansch 981 gegenüber dem Stützflansch 983 verklemmt und die Drehposition fixiert. Die Kontaktflächen können konisch ausgebildet sein, um eine erhöhte Klemmkraft zu erhalten.

Die Montage eines entsprechenden Planetengetriebes 900 erfolgt, indem zunächst das Getriebe an der Struktur befestigt wird. Bei Bedarf erfolgt auch bereits jetzt die Einstellung mittels Exzenter (z. B. die Zustellung eines abtriebseitigen Ritzels). Als nächstes wird der Befestigungsflansch 981 ausgerichtet. Dabei ist nebst der gewünschten Orientierung des Motors auch die Lage der radialen Durchgangsöffnung am Befestigungsflansch 981 zu beachten. Die erhaltene Orientierung wird mittels Festziehen der Schrauben 985 fixiert. Schliesslich wird der Motor am Befestigungsflansch 981 montiert.

Die Orientierung kann jederzeit nachjustiert werden, wobei der Motor vorgängig demontiert wird.

Die Erfindung ist nicht auf die dargestellten Ausführungsbeispiele beschränkt. Namentlich lassen sich vorstehend mit Ritzel gezeigte Planetengetriebe auch mit Abtriebswellen ausbilden und umgekehrt. Die Abtriebswelle kann beispielsweise auch als Hohlwelle oder Zahnwelle ausgebildet sein. Das Abtriebsritzel kann unmittelbar in den Planetenradträger integriert sein. Der Motor kann direkt am Getriebe montiert werden oder über eine Welle, einen Riemen- oder Kettenantrieb mit dem Getriebe gekoppelt werden.

Ist der Motor direkt am Getriebe montiert, kann der antriebseitige Gehäuseteil einen Befestigungsflansch für den Motor aufweisen, der eine Befestigung des Motors in unterschiedlichen Drehstellungen ermöglicht. Bei Varianten, in welchen das Getriebegehäuse bei der Zustellung mitrotiert, kann somit eine Änderung der Drehposition des Motors (zumindest teilweise) kompensiert werden. Dies kann namentlich wegen der zum Motor führenden Leitungen angezeigt sein. Insbesondere ermöglicht der Befestigungsflansch die Befestigung des Motors in verschiedenen winkelmässig beabstandeten Drehstellungen, z. B. jeweils um 45° versetzt. Dazu werden entsprechend viele Befestigungslöcher und Befestigungsschrauben am Befestigungsflansch des Getriebegehäuses und am Motor vorgesehen.

Die angegebene Exzentrizität versteht sich lediglich als Beispiel. Der Wert von 0.5 mm ist in der Regel gut für Anwendungen geeignet, bei welchen ein Abtriebsritzel auf eine Zahnstange zugestellt werden muss. Bei Anwendungen, in welchen eine ausreichende Spannung von Riemen oder Ketten zu gewährleisten ist, wird die Exzentrizität in der Regel höher gewählt und der Abstand zwischen der Drehachse und der Rotationsachse für die Positionseinstellung beträgt z. B. 2.5 mm.

Zusammenfassend ist festzustellen, dass die Erfindung ein Planetengetriebe schafft, welches eine einfache Einstellung der Position der Abtriebs-Drehachse ermöglicht und eine sichere Abstützung der auf den Abtrieb einwirkenden Kräfte ermöglicht.

## Patentansprüche

1. Planetengetriebe (100; 200; 300; 400; 500; 600; 700; 800; 900), umfassend
a) ein Gehäuse (110; 210; 310; 410; 510; 610; 710; 810; 910);
b) einen Antriebsteil;
c) einen Abtriebsteil mit einer um eine Abtriebs-Drehachse drehbaren Abtriebswelle;
d) mindestens eine Getriebestufe zwischen Antriebsteil und Abtriebsteil;
wobei
e) der Antriebsteil, die mindestens eine Getriebestufe und der Abtriebsteil im Gehäuse (110; 210; 310; 410; 510; 610; 710; 810; 910) gelagert sind;
f) das Gehäuse abtriebseitig einen Abtriebsflansch (140; 240; 340; 440; 540; 640; 740; 840) aufweist, wobei der Abtriebsflansch (140; 240; 340; 440; 540; 640; 740; 840) eine in Radialebenen um eine Symmetrieachse kreissymmetrische erste Mantelfläche (115; 215; 315; 415; 515; 615; 715; 815) aufweist;
**dadurch gekennzeichnet, dass** die erste Mantelfläche (115; 215; 315; 415; 515; 615; 715; 815) bezüglich der Abtriebs-Drehachse exzentrisch angeordnet ist.

2. Planetengetriebe nach Anspruch 1, **dadurch gekennzeichnet, dass** die erste Mantelfläche kreiszylindrisch ist.

3. Planetengetriebe nach Anspruch 1, **dadurch gekennzeichnet, dass** die erste Mantelfläche kreiskegelabschnittförmig ist.

4. Planetengetriebe nach Anspruch 3, **dadurch gekennzeichnet, dass** ein Konuswinkel der ersten Mantelfläche mindestens 10° beträgt.

5. Planetengetriebe nach einem der Ansprüche 1 bis 4, **dadurch gekennzeichnet, dass** der Abtriebsflansch (140; 240; 640) eine Mehrzahl von zur Symmetrieachse symmetrisch angeordneten bogenförmigen axialen Schlitzen (142; 642) aufweist.

6. Planetengetriebe nach einem der Ansprüche 1 bis 5, **dadurch gekennzeichnet, dass** in einem ersten axialen Abschnitt des Abtriebsflanschs (240) die erste Mantelfläche (215) ausgebildet ist und dass in einem zweiten axialen Abschnitt des Abtriebsflanschs (240) eine zweite Mantelfläche (252) ausgebildet ist, wobei die zweite Mantelfläche (252) um die Abtriebs-Drehachse kreissymmetrisch ist.

7. Planetengetriebe nach einem der Ansprüche 1 bis 6, **dadurch gekennzeichnet, dass** die erste Mantelfläche (115) am Aussenring eines Kegelrollenlagers (134.2) ausgebildet ist.

8. Planetengetriebe nach den Ansprüchen 6 und 7, **dadurch gekennzeichnet, dass** die zweite Mantelfläche am Aussenring des Kegelrollenlagers ausgebildet ist.

9. Planetengetriebe nach einem der Ansprüche 1 bis 8, **dadurch gekennzeichnet, dass** der Abtriebsflansch ein auf einer Mantelfläche des Gehäuses drehbar gelagertes Ringelement aufweist, wobei die erste Mantelfläche am Ringelement ausgebildet ist.

10. Planetengetriebe nach Anspruch 9, **dadurch gekennzeichnet, dass** der Abtriebsflansch weiter einen Klemmring umfasst, mittels welchem das Ringelement axial klemmbar ist.

11. Planetengetriebe nach einem der Ansprüche 1 bis 8, **gekennzeichnet durch** einen ringförmigen Klemmflansch (870), welcher drehbar aber unverlierbar am Gehäuse (810) gelagert ist.

12. Planetengetriebe nach Anspruch 11, **dadurch gekennzeichnet, dass** der Klemmflansch (870) radial nach innen ragende Elemente (874) aufweist, die mit einer umlaufenden Nut (842) in einer Mantelfläche des Abtriebsflanschs (840) zusammenwirken.

13. Planetengetriebe nach einem der Ansprüche 1 bis 12, **dadurch gekennzeichnet, dass** ein Abstand zwischen der Abtriebs-Drehachse und der Symmetrieachse der ersten Mantelfläche mindestens 2.5% des Durchmessers des Abtriebsflanschs ausmacht.

14. Planetengetriebe nach einem der Ansprüche 1 bis 18, **dadurch gekennzeichnet, dass** der Abtriebsflansch eine Aussenverzahnung aufweist.

15. Planetengetriebe, insbesondere nach einem der Ansprüche 1 bis 14, **gekennzeichnet durch** einen antriebseitigen Flansch (981) zur Befestigung eines Antriebs, wobei der Flansch (981) drehbar am Gehäuse (910) des Planetengetriebes (900) angeordnet ist und eine Drehstellung des Flanschs (981) relativ zum Gehäuse (910) durch eine Klemmung fixierbar ist.

16. Linearsystem, umfassend
- ein Planetengetriebe nach einem der Ansprüche 1 bis 14,
- ein am Abtriebsflansch angeordnetes Ritzel, und
- eine Zahnstange zum Zusammenwirken mit dem Ritzel,
wobei ein Abstand zwischen der Abtriebs-Drehachse und der Symmetrieachse der ersten Mantelfläche mindestens dem Modul der Zahnstange entspricht, bevorzugt mindestens 5% grösser ist als der Modul der Zahnstange.

## Claims

1. A planetary transmission (100; 200; 300; 400; 500; 600; 700; 800; 900), comprising
a) a housing (110; 210; 310; 410; 510; 610; 710; 810; 910);
b) a drive part;
c) an output part having an output shaft which is rotatable about an output axis of rotation;
d) at least one gear stage between the drive part and the output part;
wherein
e) the drive part, the at least one gear stage and the output part are mounted in the housing (110; 210; 310; 410; 510; 610; 710; 810; 910);
f) the housing has an output flange (140; 240; 340; 440; 540; 640; 740; 840) on the output side, wherein the output flange (140; 240; 340; 440; 540; 640; 740; 840) has a first lateral surface (115; 215; 315; 415; 515; 615; 715; 815) with circular symmetry in radial planes about an axis of symmetry;
**characterized in that** the first lateral surface (115; 215; 315; 415; 515; 615; 715; 815) is arranged eccentrically with respect to the output axis of rotation.

2. The planetary transmission as claimed in claim 1, **characterized in that** the first lateral surface is circular-cylindrical.

3. The planetary transmission as claimed in claim 1, **characterized in that** the first lateral surface is in the shape of a portion of a circular cone.

4. The planetary transmission as claimed in claim 3, **characterized in that** a cone angle of the first lateral surface is at least 10°.

5. The planetary transmission as claimed in one of claims 1 to 4, **characterized in that** the output flange (140; 240; 640) has a plurality of arcuate axial slots (142; 642) arranged symmetrically with respect to the axis of symmetry.

6. The planetary transmission as claimed in one of claims 1 to 5, **characterized in that** the first lateral surface (215) is formed in a first axial portion of the output flange (240), and **in that** a second lateral surface (252) is formed in a second axial portion of the output flange (240), wherein the second lateral surface (252) has circular symmetry about the output axis of rotation.

7. The planetary transmission as claimed in one of claims 1 to 6, **characterized in that** the first lateral surface (115) is formed on the outer ring of a tapered roller bearing (134.2).

8. The planetary transmission as claimed in claims 6 and 7, **characterized in that** the second lateral surface is formed on the outer ring of the tapered roller bearing.

9. The planetary transmission as claimed in one of claims 1 to 8, **characterized in that** the output flange has an annular element which is mounted rotatably on a lateral surface of the housing, wherein the first lateral surface is formed on the annular element.

10. The planetary transmission as claimed in claim 9, **characterized in that** the output flange furthermore comprises a clamping ring by means of which the annular element can be clamped axially.

11. The planetary transmission as claimed in one of claims 1 to 8, **characterized by** an annular clamping flange (870) which is mounted rotatably, but captively, on the housing (10).

12. The planetary transmission as claimed in claim 11, **characterized in that** the clamping flange (870) has radially inwardly projecting elements (874) which interact with an encircling groove (842) in a lateral surface of the output flange (840).

13. The planetary transmission as claimed in one of claims 1 to 12, **characterized in that** a distance between the output axis of rotation and the axis of symmetry of the first lateral surface amounts to at least 2.5% of the diameter of the output flange.

14. The planetary transmission as claimed in one of claims 1 to 18, **characterized in that** the output flange has an external toothing.

15. The planetary transmission, in particular as claimed in one of claims 1 to 14, **characterized by** a drive-side flange (981) for the fastening of a drive, wherein the flange (981) is arranged rotatably on the housing (910) of the planetary transmission (900), and a rotational position of the flange (981) relative to the housing (910) can be fixed by means of clamping.

16. A linear system, comprising
- a planetary transmission as claimed in one of claims 1 to 14,
- a pinion which is arranged on the output flange, and
- a rack for interaction with the pinion,
wherein a distance between the output axis of rotation and the axis of symmetry of the first lateral surface corresponds at least to the module of the rack, and is preferably at least 5% larger than the module of the rack.

## Revendications

1. Transmission planétaire (100 ; 200 ; 300 ; 400 ; 500 ; 600 ; 700 ; 800 ; 900), comportant
a) un carter (110 ; 210 ; 310 ; 410 ; 510 ; 610 ; 710 ; 810 ; 910) ;
b) une partie d'entraînement ;
c) une partie de sortie dotée d'un arbre de sortie rotatif autour d'un axe de rotation de sortie ;
d) au moins un étage de transmission entre la partie d'entraînement et la partie de sortie ;
dans laquelle
e) la partie d'entraînement, l'au moins un étage de transmission et la partie de sortie sont montés dans le carter (110 ; 210 ; 310 ; 410 ; 510 ; 610 ; 710 ; 810 ; 910) ;
f) le carter comprend, côté sortie, une bride de sortie (140 ; 240 ; 340 ; 440 ; 540 ; 640 ; 740 ; 840), dans laquelle la bride de sortie (140 ; 240 ; 340 ; 440 ; 540 ; 640 ; 740 ; 840) comprend une première surface d'enveloppe (115 ; 215 ; 315 ; 415 ; 515 ; 615 ; 715 ; 815) à symétrie circulaire autour d'un axe de symétrie dans des plans radiaux ;
**caractérisée en ce que** la première surface d'enveloppe (115 ; 215 ; 315 ; 415 ; 515 ; 615 ; 715 ; 815) est disposée de manière excentrée par rapport à l'axe de rotation de sortie.

2. Transmission planétaire selon la revendication 1,
**caractérisée en ce que** la première surface d'enveloppe est cylindrique circulaire.

3. Transmission planétaire selon la revendication 1,
**caractérisée en ce que** la première surface d'enveloppe est en forme de partie de cône circulaire.

4. Transmission planétaire selon la revendication 3, **caractérisée en ce qu'**un angle de cône de la première surface d'enveloppe vaut au moins 10°.

5. Transmission planétaire selon l'une des revendications 1 à 4, **caractérisée en ce que** la bride de sortie (140 ; 240 ; 640) comprend une pluralité de fentes axiales arquées (142 ; 642) disposées symétriquement par rapport à l'axe de symétrie.

6. Transmission planétaire selon l'une des revendications 1 à 5, **caractérisée en ce que** la première surface d'enveloppe (215) est formée dans une première partie axiale de la bride de sortie (240) et **en ce qu'**une deuxième surface d'enveloppe (252) est formée dans une deuxième partie axiale de la bride de sortie (240), la deuxième surface d'enveloppe (252) présentant une symétrie circulaire autour de l'axe de rotation de sortie.

7. Transmission planétaire selon l'une des revendications 1 à 6, **caractérisée en ce que** la première surface d'enveloppe (115) est formée au niveau de la bague extérieure d'un palier à rouleaux coniques (134.2).

8. Transmission planétaire selon les revendications 6 et 7, **caractérisée en ce que** la deuxième surface d'enveloppe est formée au niveau de la bague extérieure du palier à rouleaux coniques.

9. Transmission planétaire selon l'une des revendications 1 à 8, **caractérisée en ce que** la bride de sortie comprend un élément annulaire monté de manière rotative sur une surface d'enveloppe du carter, la première surface d'enveloppe étant formée au niveau de l'élément annulaire.

10. Transmission planétaire selon la revendication 9,
**caractérisée en ce que** la bride de sortie comporte en outre une bague de serrage au moyen de laquelle l'élément annulaire peut être serré axialement.

11. Transmission planétaire selon l'une des revendications 1 à 8, **caractérisée par** une bride de serrage annulaire (870), laquelle est montée de manière rotative mais imperdable sur le carter (810).

12. Transmission planétaire selon la revendication 11,
**caractérisée en ce que** la bride de serrage (870) comprend des éléments (874) faisant saillie radialement vers l'intérieur, lesquels coopèrent avec une rainure périphérique (842) dans une surface d'enveloppe de la bride de sortie (840).

13. Transmission planétaire selon l'une des revendications 1 à 12, **caractérisée en ce qu'**une distance entre l'axe de rotation de sortie et l'axe de symétrie de la première surface d'enveloppe représente au moins 2,5% du diamètre de la bride de sortie.

14. Transmission planétaire selon l'une des revendications 1 à 18, **caractérisée en ce que** la bride de sortie comprend une denture extérieure.

15. Transmission planétaire, en particulier selon l'une des revendications 1 à 14, **caractérisée par** une bride (981) côté entraînement pour la fixation d'un entraînement, la bride (981) étant disposée de manière rotative sur le carter (910) de la transmission planétaire (900) et une position angulaire de la bride (981) par rapport au carter (910) pouvant être fixée par un serrage.

16. Système linéaire, comportant
- une transmission planétaire selon l'une des revendications 1 à 14,
- un pignon disposé sur la bride de sortie, et
- une crémaillère destinée à coopérer avec le pignon, dans lequel une distance entre l'axe de rotation de sortie et l'axe de symétrie de la première surface d'enveloppe correspond au module de la crémaillère, de préférence est supérieure d'au moins 5% au module de la crémaillère.
